# EUROPÄISCHE PATENTSCHRIFT

(11) **EP 0 910 530 B1**
(45) Veröffentlichungstag und Bekanntmachung des Hinweises auf die Patenterteilung: **02.04.2003**
(21) Anmeldenummer: 98929221.4
(22) Anmeldetag: 15.05.1998
(51) Int. Cl.: B62M 11/18

(54) **MEHRGANG-GETRIEBE FÜR FAHRRÄDER**
MULTISPEED BICYCLE GEAR SYSTEM
TRANSMISSION A PLUSIEURS VITESSES POUR BICYCLETTES

(30) Priorität: 16.05.1997 DE 19720794
(43) Veröffentlichungstag der Anmeldung: 28.04.1999
(73) Patentinhaber: ROHLOFF, Bernhard, 34125 Kassel (DE)
(72) Erfinder: ROHLOFF, Bernhard, 34125 Kassel (DE)
(74) Vertreter: Freiherr von Schorlemer, Reinfried, Dipl.-Phys.
(86) Internationale Anmeldenummer: DE9801366
(87) Internationale Veröffentlichungsnummer: WO98052817

(56) Entgegenhaltungen:
- EP-A- 0 554 874
- DE-A- 3 527 699
- DE-A- 3 819 065
- GB-A- 2 251 276

## Beschreibung

Die Erfindung betrifft ein Mehrgang-Getriebe der im Oberbegriff des Anspruchs 1 angegebenen Gattung.

Mehrgang-Getriebe für Fahrräder, insbesondere in Form von Mehrgang-Getriebenaben, sind in zahlreichen Ausführungsformen bekannt. Sie dienen wie Kettenschaltungen dem Zweck, mehrere wählbare Gangstufen bzw. Übersetzungsverhälnisse zur Verfügung zu stellen. Bisher können mit derartigen Getrieben bis zu zwölf Gangstufen realisiert werden, was in der Regel durch die Hintereinanderschaltung von wenigstens zwei, nachfolgend kurz als Planetengetriebe bezeichneten Planetenradgetrieben erreicht wird (DE 4203 509 A1, DE 43 42 347 C1).

Zur Realisierung der verschiedenen Gangstufen ist es bei derartigen Getrieben üblich, wenigstens ein Sonnenrad wahlweise drehfest mit der Nabenachse zu verbinden, wobei unter einer "drehfesten" Verbindung meistens verstanden wird, daß das Sonnenrad nur in einer ausgewählten Drehrichtung fest mit der Nabenachse verbunden ist, wohingegen es sich in der entgegengesetzten Drehrichtung nach Art eines Freilaufs auf der Nabenachse drehen kann. Zur Herstellung dieses Zustands dienen in Verzahnungen eingreifende und wahlweise aus diesen entfembare Schaltklinken.

Bei bekannten Mehrgang-Getrieben der eingangs bezeichneten Gattung (EP 0 383 350 B1, DE 41 42 867 A1) besteht die Verzahnung aus am Außenmantel einer Nabenachse angebrachten, radial vorstehenden Zähnen, während die Schaltklinken federnd vorgespannte, an den Sonnenrädern schwenkbar gelagerte Schwenkhebel sind. Um einen Eingriff der Schaltklinken in die Verzahnung zu vermeiden oder bereits im Eingriff befindliche Schaltklinken wieder aus dem Eingriff zu lösen, ist zusätzlich eine drehbar auf der Nabenachse gelagerte, mit Verriegelungszungen versehene Schalthülse vorgesehen. Diese kann so auf der Nabenachse gedreht werden, daß entweder das Einfallen der Sperrklinken in die Lücken zwischen den Zähnen verhindert wird oder bereits eingefallene Schaltklinken durch Auflaufen auf eine entsprechende Schrägfläche wieder aus dem Eingriff gelöst werden.

Ein Problem derartiger Schalteinrichtungen besteht darin, daß sie zu einer nicht unerheblichen Durchmesservergrößerung und damit auch zu einer Vergrößerung des Gewichts der Getriebenabe führen, da alle schaltbaren Teile im Wirkungsbereich der die Nabenachse umgebenden Schalthülse angeordnet sein müssen. Außerdem behindert die Schalthülse das Anbringen weiterer Schalteinrichtungen, insbesondere solcher, die mit axial verschiebbaren, in Führungsschlitzen der Nabenachse angeordneten Schaltschiebern arbeiten (DE 42 03 509 A1), so daß entweder die Mehrgangnabe groß und damit auch schwer ausgebildet oder der gesamte Schaltmechanismus aus so klein und schwach dimensionierten Bauteilen zusammengesetzt werden muß, daß sich eine große Störanfälligkeit ergibt.

Demgegenüber liegt der Erfindung die Aufgabe zugrunde, das Mehrgang-Getriebe der eingangs bezeichneten Gattung so auszubilden, daß die Schalteinrichtungen keine wesentliche Durchmesservergrößerung des Getriebes zur Folge haben und dennoch eine hohe Betriebssicherheit gewährleistet ist.

Zur Lösung dieser Aufgabe dienen die kennzeichnenden Merkmale des Anspruchs 1.

Weitere vorteilhafte Merkmale ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen Längsschnitt durch ein erfindungsgemäßes Mehrgang-Getriebe;
Fig. 2 bis 4 Querschnitte durch Planetengetriebe des Getriebes etwa längs der Linien II-II bis IV-IV der Fig. 1 in einem geringfügig vergrößerten Maßstab;
Fig. 5 einen Prinzipskizze des Getriebes nach Fig. 1;
Fig. 6 eine Seitenansicht einer Schaltkupplung des Mehrgang-Getriebes nach Fig. 1 in einem vergrößerten Maßstab;
Fig. 7 und 8 Schnitte längs der Linien VII-VII und VIII-VIII der Fig. 6;
Fig. 9 in einer vergrößerten und auseinandergezogenen, perspektivischen Darstellung einen mit einer Schaltklinke versehenen Abschnitt einer erfindungsgemäßen Nabenachse;
Fig. 10 eine der Fig. 9 entsprechende Darstellung, jedoch in Verbindung mit einem auf die Nabenachse aufgezogenen Sonnenrad;
Fig. 11 bis 13 je einen Querschnitt durch die Anordnung nach Fig. 10 in drei unterschiedlichen Positionen einer Schaltklinke;
Fig. 14 eine Draufsicht auf die Achse des erfindungsgemäßen Getriebes nach Fig. 1 in einem geringfügig verkleinerten Maßstab;
Fig. 15 eine Draufsicht auf eine erfindungsgemäße Nocken- und Schaltwelle des Getriebes nach Fig. 1;
Fig. 16 Schnitte durch die Nabenachse nach Fig. 14 mit eingelegter Nocken- und Schaltwelle nach Fig. 15 längs der Schnittlinien A-A bis F-F der Fig. 14 und 15; und
Fig. 17 eine schematische Darstellung der relativen Lagen von Nocken und Führungsschlitzen der Nocken- und Schaltwelle nach Fig. 7 in einer Abwicklung.

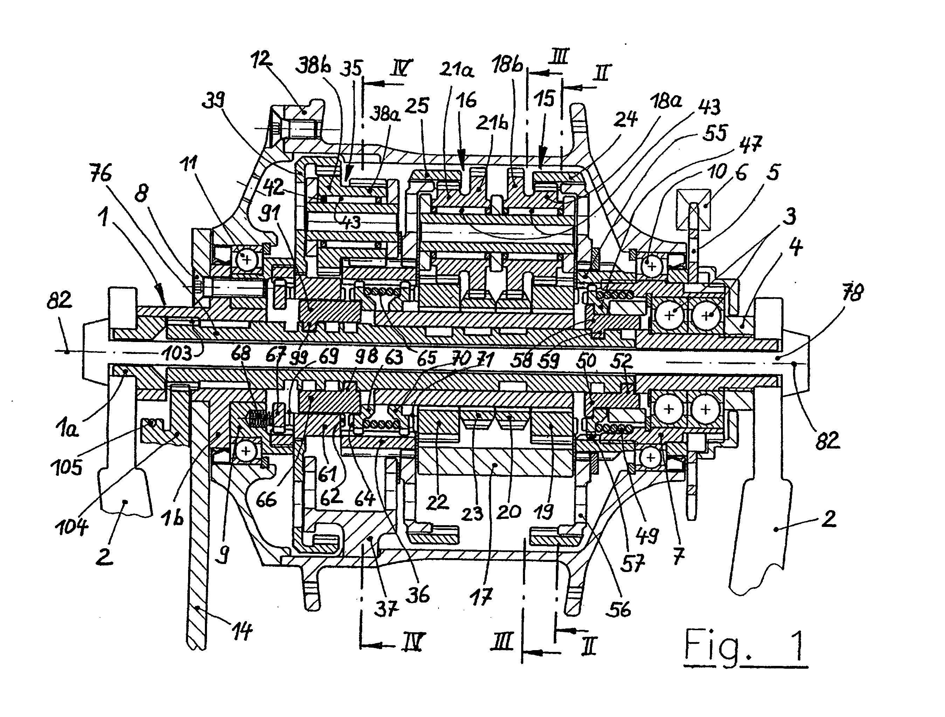

Ein speziell als Mehrgang-Getriebenabe für Fahrräder ausgebildetes Mehrgang-Getriebe enthält nach Fig. 1 eine hohl ausgebildete Nabenachse 1, deren zapfenartig ausgebildeten Enden 1a in entsprechenden Ausfallenden von nur schematisch dargestellten Rahmenteilen 2 liegen und die z.B. mit einem üblichen Schnellspanner, Muttern oder sonstwie drehfest in diesen montiert sind. Auf der Antriebsseite ist die Nabenachse 1 mit Kugellagern 3 versehen, die mit einem Spannring 4 axial auf ihr festgelegt sind. Mittels der Kugellager 3 ist ein fest mit einem Antriebsritzel 5 für eine Kette 6 od. dgl, verbundener Antreiber 7 drehbar auf der Nabenachse 1 gelagert. Auf der Abtriebsseite und in einem vorgewählten Abstand vom Spannring 4 weist die Nabenachse 1 einen radialen Flansch 1b auf, an dem mittels Schrauben 8 ein auf die Nabenachse 1 aufgezogener Lagerring 9 axial unverschieblich und drehfest befestigt ist. Auf dem Antreiber 7 und dem Lagerring 9 ist mittels Lagern 10 und 11 eine Nabenhülse 12 drehbar gelagert. Dabei liegen das Antriebsritzel 5, der Antreiber 7 und die Nabenhülse 12 koaxial zur Nabenachse 1. Außerdem kann eine drehfest mit dem Lagerring 9 und dem Flansch 1b verbundene und mit einem der Rahmenteile 2 zu verbindende Stütze 14 vorgesehen sein, die zur Abstützung der Differenz zwischen dem vom Antreiber 7 in die Getriebenabe eingeleiteten Drehmoment und dem über die Nabenhülse 12 an ein Hinterrad des Fahrrads weitergeleiteten Drehmoment dient, wobei das nicht dargestellte Hinterrad in üblicher Weise über Speichen od. dgl. mit der Nabenhülse 12 verbunden ist. Sofern die Getriebenabe mit einer nicht dargestellten Bremse versehen ist, übernimmt die Stütze 14 auch die Abstützung des Bremsmoments.

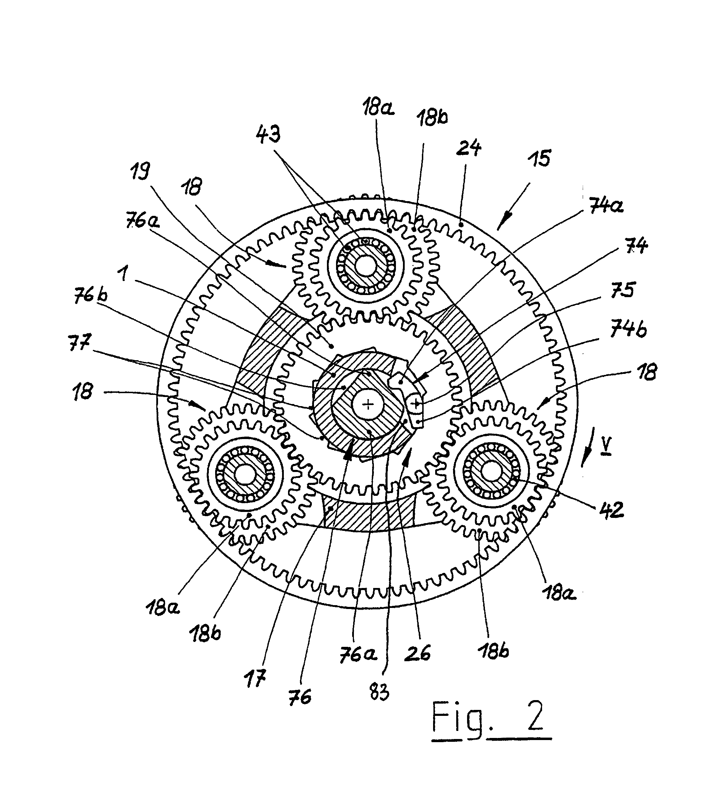

In der Nabenhülse 12 ist ein Schaltgetriebe gelagert, das zwei auf der Nabenachse 1 hintereinander angeordnete Planetengetriebe 15 und 16 enthält, die mit einem gemeinsamen, vorzugsweise einstückig hergestellten Planetenträger 17 versehen sind. Das erste, auf der Antriebsseite und in der Nähe des Antreibers 7 gelegene Planetengetriebe 15 enthält, wie insbesondere aus Fig. 2, 3 und 5 ersichtlich ist, einen Planetenträgerabschnitt mit wenigstens einem ersten Planetenrad 18, das wenigstens zwei Stufen 18a,18b mit unterschiedlichen Durchmessern aufweist, wobei die Stufe 18a einen kleineren Durchmesser aufweist und mit einem ersten Sonnenrad 19 von vergleichsweise großem Durchmesser kämmt, während die den größeren Durchmesser aufweisende Stufe 18b mit einem zweiten Sonnenrad 20 im Eingriff ist, das einen entsprechend kleineren Durchmesser besitzt. Das vom Antreiber 7 axial weiter entfernt liegende zweite Planetengetriebe 16 enthält einen Planetenträgerabschnitt mit wenigstens einem zweiten Planetenrad 21, das ebenfalls wenigstens zwei Stufen 21a,21b mit unterschiedlichen Durchmessern aufweist, wobei die Stufe 21a mit dem kleineren Durchmesser mit einem dritten Sonnenrad 22 von vergleichsweise großem Durchmesser und die den größeren Durchmesser aufweisende Stufe 21b mit einem vierten Sonnenrad 23 im Eingriff ist, das einen entsprechend kleineren Durchmesser besitzt. Dabei versteht sich, daß die beschriebenen Planeten- und Sonnenräder sowie Planetenträger in üblicher Weise um die Nabenachse 1 umlaufen können.

Schließlich weisen die Planetengetriebe 15,16 je ein zur Nabenachse 1 koaxiales erstes bzw. zweites Hohlrad 24 bzw. 25 auf, wobei das Hohlrad 24 mit der Stufe 18a und das Hohlrad 25 mit der Stufe 21a des ersten bzw. zweiten Planetenrads 18 bzw. 21 im Eingriff ist.

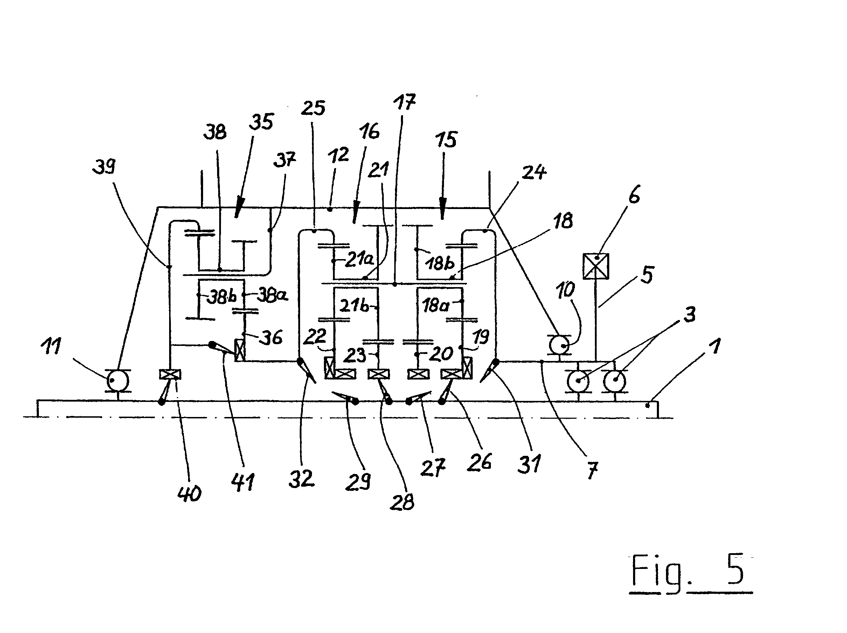

Zur Bereitstellung und Auswahl von mehreren Übersetzungsverhältnissen zwischen dem Antreiber 7 und der Nabenhülse 12 ist außerdem eine Schalteinrichtung vorgesehen, die in Fig. 5 schematisch angedeutete Mittel 26, 27, 28 und 29, vorzugsweise in Form von Schaltkupplungen aufweist, mittels derer die Sonnenräder 19, 20, 22 und 23 wahlweise mit der Nabenachse 1 verbunden werden können.

Für Fahrräder bestimmte Mehrgang-Getriebenaben dieser Art sind dem Fachmann allgemein bekannt und brauchen daher nicht näher erläutert werden. Zur Vermeidung von Wiederholungen wird insoweit z.B. auf die Druckschriften DE 41 42 687 A1 und DE 43 42 347 C1 verwiesen.

Nach einem besonderen Merkmal der Erfindung wird das Planetengetriebe 15 an dessen Hohlrad 24 angetrieben, das zu diesem Zweck drehfest und axial unverschiebbar mit dem Antreiber 7 verbunden ist. Außerdem sind bei einer bevorzugten Ausführungsform der Erfindung beide Planetengetriebe 15,16 spiegelbildlich zu einer gedachten, zwischen ihnen verlaufenden und senkrecht zur Nabenachse 1 liegenden Symmetrieebene aufgebaut und angeordnet, wobei z.B. die beiden den größeren Durchmesser aufweisenden Planetenradstufen 18b,21b einander unmittelbar zugewandt sind (Fig. 1 und 5), während die beiden den kleineren Durchmesser aufweisenden Planetenradstufen 18a,21a größere Abstände von der gedachten Symmetrieebene besitzen. Dabei weisen die Stufen 18b,21b vorzugsweise identische Durchmesser und Zähnezahlen auf, und dasselbe gilt für die Durchmesser und Zähnezahlen der Stufen 18a,21a. Durch diesen spiegelsymmetrischen Aufbau können die Kosten für die Herstellung und Lagerhaltung erheblich reduziert werden. Entsprechend können auch die Sonnenräder 20,23 bzw. 19,22 und die Hohlräder 24,25 paarweise identisch ausgebildet werden. Daher sind insgesamt nur fünf Zähnezahlen an vier unterschiedlichen Bauteilen 18, 19, 20 und 24 festzulegen, da die Bauteile 21, 22, 23 und 25 den Bauteilen 18, 19, 20 und 24 identisch entsprechen.

Wird das beschriebene Schaltgetriebe nur als Siebengang-Getriebe verwendet, dient zum Abtrieb das zweite Hohlrad 25 des Planetengetriebes 16, das in diesem Fall abweichend von Fig. 1 und 5 direkt fest mit der Nabenhülse 12 verbunden sein könnte. Ist dabei zusätzlich ein Freilauf für die Nabenhülse 12 erwünscht, könnte das Hohlrad 25 z.B. mit einem Klinkenradträger verbunden werden, der Freilaufklinken trägt, die mit einer entsprechenden Verzahnung in der Nabenhülse 12 derart zusammenwirken, daß eine Drehmomentübertragung nur in einer Richtung erfolgen kann.

Zur Herstellung verschiedener Gangstufen dienen bei einer derartigen Variante zunächst die vier Schaltkupplungen 26 bis 29. Da hierbei der Antreiber 7 mit dem ersten Hohlrad 24 und das zweite Hohlrad 25 mit der Nabenhülse 12 fest verbunden ist, werden z.B. mit den Schaltkupplungen 26 und 28 das erste und das dritte Sonnenrad 19,23 mit der Nabenachse 1 verbunden (Fig. 5), während die Sonnenräder 20,22 frei rotieren können. Dadurch legt das erste Planetengetriebe 15 eine Drehzahl für den Planetenträger 17 fest, der seinerseits das Planetenrad 21 antreibt. Dieses wälzt sich auf dem feststehenden dritten Sonnenrad 23 ab, das dadurch eine Drehzahl für das zweite Hohlrad 25 und damit die Nabenhülse 12 festlegt. Eine weitere Gesamtübersetzung ist dadurch herstellbar, daß die Schaltkupplungen 27,29 ein- und die Schaltkupplungen 26,28 ausgeschaltet werden, so daß jetzt die mit der Nabenachse 1 verbundenen Sonnenräder 20,22 das Gesamtübersetzungsverhältnis festlegen. Weitere Übersetzungsverhältnisse könnten dadurch erhalten werden, daß die Sonnenräder 19,22 bzw. 20,23 mit der Nabenachse 1 verbunden werden. Bei spiegelsymmetrischem Aufbau der beiden Planetengetriebe 15,16 führt das allerdings jeweils zu einem Gesamtübersetzungsverhältnis von 1 : 1, d.h. zu einer direkten Gangstufe.

Zur Vergrößerung der Zahl der Gangstufen trotz Anwendung des gemeinsamen Planetenträgers 17 weist die Schalteinrichtung nach einem weiteren, besonders wesentlichen Merkmal der Erfindung zwei weitere Schaltkupplungen 31 und 32 (Fig. 5) auf, von denen die Schaltkupplung 31 zur wahlweisen Verbindung des ersten Hohlrads 24 mit dem ersten Sonnenrad 19 dient, während mit der zweiten Schaltkupplung 32 das zweite Hohlrad 25 wahlweise mit dem vierten Sonnenrad 22 kuppelbar ist. Dadurch wird bei eingeschalteter Schaltkupplung 31 das erste Planetengetriebe 15 und bei eingeschalteter Schaltkupplung 32 das zweite Planetengetriebe 16 blockiert, d.h. der Planetenträger 17 dreht bei eingeschalteter Schaltkupplung 31 stets mit der Drehzahl des Antreibers 7, während bei eingeschalteter Schaltkupplung 32 das zweite Hohlrad 25 stets mit der Drehzahl des gemeinsamen Planetenträgers 17 umläuft. Die beiden Schaltkupplungen 31,32 werden vorzugsweise wie die oben erläuterten Schaltkupplungen 26 bis 29 ausgebildet. Eine alternative Ausführungsform ist weiter unten erläutert.

Mit den Schaltkupplungen 31,32 lassen sich bei spiegelsymmetrischem Aufbau der Planetengetriebe 15,16 zusätzlich zu den beiden oben beschriebenen Gangstufen weitere Gangstufen wie folgt einstellen: Ist die Schaltkupplung 31 ein- und die Schaltkupplung 32 ausgeschaltet, dann kann mit den Schaltkupplungen 28,29 wahlweise das Sonnenrad 23 oder das Sonnenrad 22 mit der Nabenachse 1 verbunden und das jeweils andere Sonnenrad freigegeben werden, was zwei vom zweiten Planetengetriebe 16 bestimmte Übersetzungsverhältnisse zwischen dem Planetenträger 17 und der Nabenhülse 12 liefert, weil das Übersetzungsverhältnis des ersten Planetengetriebes 1 : 1 beträgt. Ist dagegen die Schaltkupplung 32 ein- und die Schaltkupplung 31 ausgeschaltet (Fig. 5), dann liegt das Übersetzungsverhältnis des zweiten Planetengetriebes 16 mit 1 : 1 fest, während zwei durch das erste Planetengetriebe 15 festgelegte Übersetzungsverhältnisse zwischen dem Antreiber 7 und dem Planetenträger 17 dadurch eingestellt werden können, daß mittels der Schaltkupplungen 26,27 wahlweise eines der Sonnenräder 19,20 mit der Nabenachse 1 verbunden wird. Schließlich läßt sich durch Einschalten beider Schaltkupplungen 31,32 auch auf diese Weise ein Übersetzungsverhältnis von 1 : 1 zwischen dem Antreiber 7 und der Nabenhülse 12 herstellen. Insgesamt ist die beschriebene Mehrgangnabe daher eine Siebengang-Getriebenabe.

Ein besonderes Kennzeichen der Schaltkupplungen 31,32 besteht darin, daß mit ihnen die Sonnenräder 19,22 zusätzlich zum zugehörigen Hohlrad 24 bzw. 25 und nicht anstelle von diesem mit dem Antreiber 7 bzw. der Nabenhülse 12 verbunden werden. Dadurch wird bei Betätigung der Schaltkupplungen 31,32 immer nur ein Teil der vom Antreiber 7 kommenden bzw. auf die Nabenhülse 12 ausgeübten An- oder Abtriebskraft umgeschaltet, und die Umschaltung dient allein dem Zweck, das jeweilige Planetengetriebe zu blockieren oder die Blockierung aufzuheben. Wegen der speziellen Konfiguration des beschriebenen Schaltgetriebes kann erreicht werden, daß z.B. nur ca. 50 % der Gesamtkraft zu schalten sind. Dagegen werden beim Stand der Technik in der Regel 100 % der An- oder Abtriebskraft zwischen einem Hohlrad und einem zugehörigen Planetenträger oder umgekehrt geschaltet, um dadurch einen zweiten Kraftübertragungsweg zu schaffen. Das erfindungsgemäße Schaltgetriebe bringt daher die Vorteile mit sich, daß weitaus geringere Kräfte auf die Schaltkupplungen ausgeübt werden müssen und die Schaltelemente daher kleiner und leichter ausgelegt werden können bzw. daß bei gleichen Kupplungskräften wesentlich höhere Antriebs- bzw. Abtriebskräfte insgesamt übertragbar sind. Das wirkt sich auch positiv auf die Kräfte aus, die beim Schalten unter Last zur Betätigung der Schaltkupplungen 31,32 aufzuwenden sind.

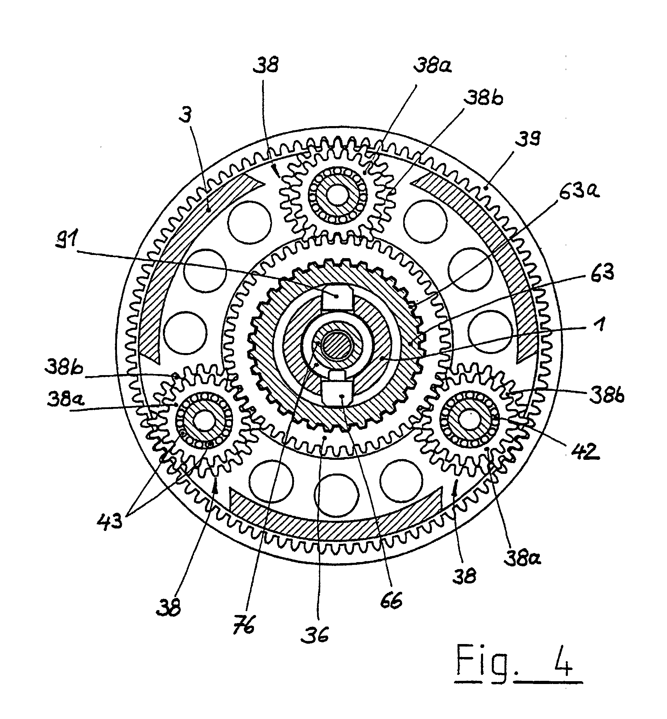

Das beschriebene Siebengang-Schaltgetriebe kann durch einen einfachen Nachschaltsatz in ein Vierzehngang-Schaltgetriebe umgewandelt werden. Hierzu ist gemäß Fig. 1 und 5 ein drittes Planetengetriebe 35 mit einem fünften Sonnenrad 36, einem zweiten Planetenträger 37 mit wenigstens einem dritten Planetenrad 38 und einem zweiten Hohlrad 39 vorgesehen. Das Planetenrad 38 weist zwei Stufen 38a,38b (Fig. 4 und 5) mit unterschiedlichen Durchmessern auf. Die Stufe 38a mit dem kleineren Durchmesser ist mit dem fünften Sonnenrad 36, die Stufe 38b mit dem größeren Durchmesser dagegen mit dem zweiten Hohlrad 39 im Eingriff, das außerdem gegen Rückwärtsdrehungen durch einen an der Nabenachse 1 abgestützten Freilauf 40 (Fig. 5) gesichert ist. Außerdem ist das fünfte Sonnenrad 36 fest mit dem zweiten Hohlrad 25 verbunden und mit diesem z.B. einstückig hergestellt (Fig. 1). Schließlich ist für diesen Fall der dritte Planetenträger 37 fest mit der Nabenhülse 12 verbunden, während das zweite Hohlrad 25 mit dem fünften Sonnenrad 36 über eine weitere, vorzugsweise einen Freilauf aufweisende Schaltkupplung 41 gemeinsam wahlweise mit dem dritten Hohlrad 39 verbunden oder von diesem entkoppelt werden können. Ist die Schaltkupplung 41 entsprechend Fig. 5 eingerückt, dann dreht sich der dritte Planetenträger 37 mit der Drehzahl des zweiten Hohlrads 25, d.h. das dritte Planetengetriebe 35 ist mit einem Übersetzungsverhältnis von 1 : 1 blockiert, so daß es ohne Wirkung ist und sich die oben erläuterten Gangstufen realisieren lassen. Ist die Schaltkupplung 41 dagegen ausgerückt, dann wird die Abtriebsdrehzahl des zweiten Hohlrads 25 über das fünfte Sonnenrad 36 auf den dritten Planetenträger 37 übertragen, da das Hohlrad 39 über den Freilauf 40 an der Nabenachse 1 drehfest abgestützt ist und daher die vom Sonnenrad 36 angetriebenen Planetenräder 38 den Planetenträger 37 mitnehmen. Dabei wirkt das dritte Planetengetriebe 35 z.B. als Untersetzungsgetriebe mit einem Übersetzungsverhältnis von weniger als 2 : 1, damit die sieben oben beschriebenen Gangstufen wahlweise bei direkter Übersetzung 1 : 1 oder bei nachgeschalteter Untersetzung wirksam gemacht werden können. Außerdem ergibt sich auch im Hinblick auf die Schaltkupplung 41 der oben in Verbindung mit den Schaltkupplungen 31,32 beschriebene Vorteil, daß mit ihr immer nur ein Teil der vom zweiten Hohlrad 25 gelieferten Antriebskraft geschaltet werden muß.

Das beschriebene Schaltgetriebe wird z.B. mit den aus der Tabelle 1 ersichtlichen Zähnezahlen betrieben:

**Tabelle 1**

| Rad | Zähnezahl |
|---|---|
| Sonne 19 | 42 |
| Sonne 20 | 35 |
| Sonne 22 | 42 |
| Sonne 23 | 35 |
| Sonne 36 | 51 |
| Planet 18 | |
| Stufe 18 a | 24 |
| Stufe 18 b | 32 |
| Planet 21 | |
| Stufe 21 a | 24 |
| Stufe 21 b | 32 |
| Planet 38 | |
| Stufe 38 a | 20 |
| Stufe 38 b | 26 |
| Hohlrad 24 | -90 |
| Hohlrad 25 | -90 |
| Hohlrad 39 | -96 |

Die beschriebenen Zähnezahlen haben zur Folge, daß das erste Planetengetriebe 15 mit einem Übersetzungsverhältnis zwischen dem Antreiber 7 und dem Planetenträger 17 von ca. 1,467 : 1 bei eingeschalteter Schaltkupplung 26 und von ca. 1,292 : 1 bei eingeschalteter Schaltkupplung 27 arbeitet. Dagegen beträgt das Übersetzungsverhältnis zwischen dem Planetenträger 17 und dem zweiten Hohlrad 25 umgekehrt ca. 1 : 1,292, wenn die Schaltkupplung 28 eingeschaltet ist, bzw. ca. 1 : 1,467, wenn die Schaltkupplung 29 eingeschaltet ist. Dadurch arbeitet das Planetengetriebe 15 stets als Untersetzungsgetriebe, das Planetengetriebe 16 dagegen stets als Übersetzungsgetriebe. Schließlich beträgt das Übersetzungsverhältnis des Nachschaltsatzes im Ausführungsbeispiel ca. 2,448 : 1, so daß sich insgesamt eine Untersetzung ergibt, wenn die Schaltkupplung 41 ausgeschaltet ist, und 1:1, wenn die Schaltkupplung 41 eingeschaltet ist.

Bei der beschriebenen Anordnung lassen sich mit den in Tabelle 1 angegebenen Zähnezahlen die in Tabelle 2 angegebenen Gangstufen realisieren. Dabei ist mit dem Buchstaben "x" unter den vorhandenen Schaltkupplungen jeweils angegeben, welche Schaltkupplung sich bei der jeweiligen Schaltstufe im eingeschalteten Zustand befindet, wohingegen ein Fehlen des Buchstabens "x" andeutet, daß die jeweilige Schaltkupplung ausgeschaltet ist. Als "Übersetzungsverhältnis" ist dabei wie in der vorliegenden Beschreibung das Verhältnis der Antriebsdrehzahl zur Abtriebsdrehzahl definiert.

**Tabelle 2**

| Gangstufe | Schaltkupplungen | | | | | | | Übersetzung | Stufenprung |
|---|---|---|---|---|---|---|---|---|---|
| | 26 | 27 | 28 | 29 | 31 | 32 | 41 | | |
| 1. Gang | X | | | | | X | | 3,591 | 13,5 % |
| 2. Gang | | X | | | | X | | 3,163 | 13,8 % |
| 3. Gang | X | | X | | | | | 2,779 | 13,5 % |
| 4. Gang | | | | | X | X | | 2,448 | 13,5 % |
| 5. Gang | | X | | X | | | | 2,157 | 13,8 % |
| 6. Gang | | | X | | X | | | 1,895 | 13,5 % |
| 7. Gang | | | | X | X | | | 1,670 | 13,8 % |
| 8. Gang | X | | | | | X | X | 1,467 | 13,5 % |
| 9. Gang | | X | | | | X | X | 1,292 | 13,8 % |
| 10. Gang | X | | X | | | | X | 1,135 | 13,5 % |
| 11. Gang | | | | | X | X | X | 1,000 | 13,5 % |
| 12. Gang | | X | | X | | | X | 0,881 | 13,8 % |
| 13. Gang | | | X | X | | | X | 0,774 | 13,5 % |
| 14. Gang | | | | X | X | | X | 0,682 | - |

Daraus folgt, daß vergleichsweise konstante Stufensprünge zwischen ca. 13,5 % und 13,8 % erhalten werden, wenn als Stufensprung das Verhältnis der Übersetzung einer Gangstufe zur Übersetzung der jeweils schnelleren Gangstufe bezeichnet wird und der in der Tabelle für irgendeinen Gang angegebene Stufensprung den Übergang von diesem Gang zum jeweils nächsten Gang angibt.

Weiter ist es mit dem beschriebenen Schaltgetriebe möglich, die Gesamtübersetzung, d.h. das Verhältnis der größten Übersetzung zur kleinsten Übersetzung zu variieren. Im Ausführungsbeispiel beträgt die Gesamtübersetzung ca. 526 %, so daß ein sehr breiter Bereich von Übersetzungsverhältnissen abgedeckt ist.

Ein weiterer wesentlicher Vorteil der beschriebenen, derzeit für am besten gehaltenen Ausführungsform des Getriebes besteht darin, daß die Zähnezahlen der verschiedenen Stufen der Planetenräder mit 20, 24, 26 und 32 vergleichsweise groß bemessen werden können. Hierdurch ist es möglich, die Planetenräder 18, 21 und 38 mit Hilfe von in Fig. 1 bis 4 angedeuteten Wälzlagern, insbesondere Nadellagern, drehbar in den Planetenträgern 17 und 37 zu lagern, wobei jedes Wälzlager aus einem zwischen zwei scheibenförmigen Planetenträgerteilen geführten Lagerkäfig 42 und einer Mehrzahl von in diesem angeordneten Lagernadeln 43 besteht, deren Achsen parallel zu den Drehachsen der Planetenräder 18, 21 und 38 angeordnet sind. Dadurch lassen sich die Reibungsverluste klein halten, was für den Gesamtwirkungsgrad günstig ist. Günstig für den Wirkungsgrad ist schließlich auch die vergleichsweise geringe Differenz zwischen den Zähnezahlen der jeweils im Eingriff befindlichen Sonnen- und Planetenräder.

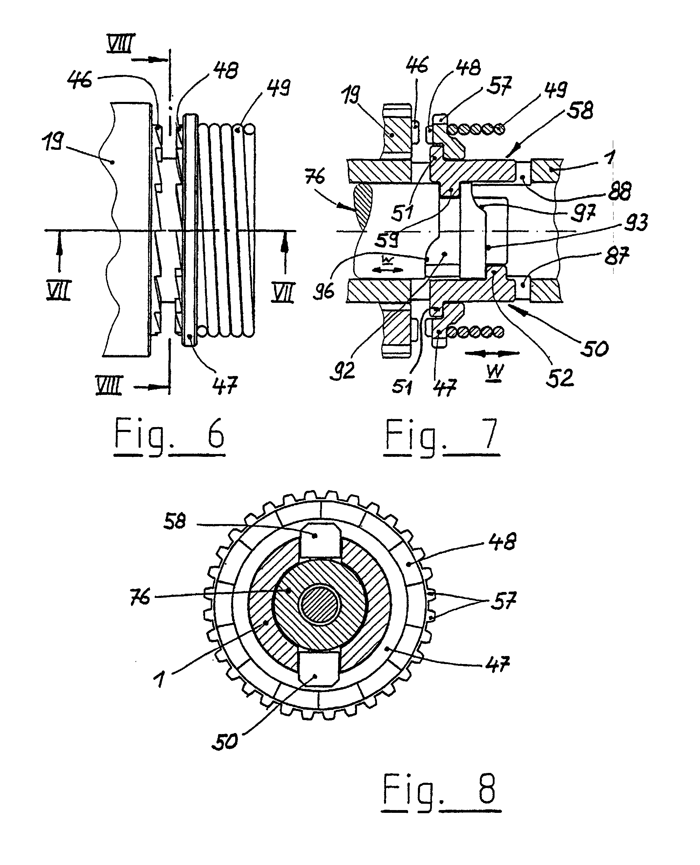

Ein bevorzugtes, derzeit für am besten gehaltenes Ausführungsbeispiel für die Schaltkupplung 31 ist in Fig. 1 und 6 bis 8 gezeigt. Das Sonnenrad 19 ist danach auf seiner dem Antreiber 7 zugewandten Stirnseite mit einer Sägezahn-Verzahnung 46 versehen und steht mit dieser einem koaxial zur Nabenachse 1 angeordneten Kupplungsring 47 gegenüber, der an seiner dem Sonnenrad 19 zugewandten Stirnseite eine entsprechende, in die Verzahnung 46 passende Sägezahn-Verzahnung 48 aufweist. Der Kupplungsring 47 steht unter der Vorspannung einer zur Nabenachse 1 koaxialen, als Schraubenfeder ausgebildeten Druckfeder 49, deren eines Ende am Antreiber 7 (Fig. 1) und deren anderes Ende am Kupplungsring 47 abgestützt ist und diesen in Richtung des Sonnenrads 19 zu verschieben sucht. Zur Steuerung des Kupplungsvorgangs ist z.B. wenigstens ein Schaltschieber 50 vorgesehen, der in einem achsparallelen Führungsschlitz der Nabenachse 1 in Richtung eines Pfeils w verschiebbar gelagert und mit einem Sperrzahn 51 versehen ist, mit dem er z.B. an der die Verzahnung 48 aufweisenden Stirnseite des Kupplungsrings 47 anliegt. Der Schaltschieber 50 weist außerdem ein radial nach innen ragendes Schaltelement, z.B. in Form eines Schaltzapfens 52 auf, der in weiter unten erläuterter Weise zur Betätigung des Schaltschiebers 50 benutzt wird. Dabei ist die Anordnung so getroffen, daß der Kupplungsring 47 bei der aus Fig. 1 ersichtlichen Stellung des Schaltschiebers 50 gegen den Druck der Druckfeder 49 in einem solchen axialen Abstand vom Sonnenrad 19 gehalten wird, daß die beiden Verzahnungen 46,48 nicht im Eingriff sind. Wird der Schaltschieber 50 dagegen axial weiter in der Nabenachse 1 vorgeschoben, d.h. in Fig. 1 und 7 nach links bewegt, dann drückt die Druckfeder 49 den Kupplungsring 47 allmählich in Richtung des Sonnenrads 19 vor, bis die beiden Verzahnungen 46,48 in Eingriff gelangen. Dabei sind die schrägen Kanten der Sägezahn-Verzahnungen 46,48 in Drehrichtung so ausgerichtet, daß bei in Eingriff befindlichen Zähnen das Sonnenrad 19 vom Antreiber 7 über den Kupplungsring 47 in Antriebsrichtung mitgedreht werden kann. Wird der Antreiber 7 dagegen in der entgegengesetzten Richtung gedreht, können die Verzahnungen 46,48 im Sinne eines Freilaufs aneinander gleiten, da der Kupplungsring 47 wegen der Druckfeder 49 axial nachgiebig gelagert ist. Dieselbe Freilaufwirkung ergibt sich, wenn das Sonnenrad 19 schneller als der Antreiber 7 dreht und diesen dabei überholt. Zur Entkupplung ist es lediglich erforderlich, den Schaltschieber 50 zurückzuziehen, bis er wieder die Position nach Fig. 1 und 6 bis 8 einnimmt.

Die Lagerung des Kupplungsrings 47 erfolgt zweckmäßig mit Hilfe eines koaxial zur Nabenachse 1 angeordneten, fest mit dem Antreiber 7 verbundenen Verbindungsrohrs 55 (Fig. 1), an dem auch eine Stirnwand 56 des ersten Hohlrads 24 befestigt ist. Das Verbindungsrohr 55 weist in seinem Innenmantel achsparallel verlaufende Mitnehmernuten auf, die am Außenmantel des Kupplungsrings 47 angebrachte Mitnehmerzähne 57 (Fig. 1,7,8) formschlüssig aufnehmen. Dadurch ist der Kupplungsring 47 einerseits nach Art einer Nut/Feder-Verbindung axial verschiebbar, andererseits jedoch so im Verbindungsrohr 55 gelagert, daß er jede vom Antreiber 7 auf das Verbindungsrohr 55 ausgeübte Drehbewegung im wesentlichen spielfrei mitmacht.

Um sicherzustellen, daß der Kupplungsring 47 gleichmäßig axial verschoben wird und dabei nicht verkantet, ist vorzugsweise an einer in Umfangsrichtung um 180° versetzten Stelle der Nabenachse 1 ein zweiter, dem Schaltschieber 50 entsprechender und wie dieser gesteuerter Schaltschieber 58 (Fig. 7) mit einem z.B. als Schaltzapfen 59 ausgebildeten Schaltelement angeordnet.

Die Schaltkupplung 41 (Fig. 1 und 5) ist analog zu der Schaltkupplung 31 nach Fig. 6 bis 8 aufgebaut. Hier weist das Hohlrad 39 eine Nabe 61 (Fig. 1) mit einer Stirnverzahnung 62 auf, die einem dem Kupplungsring 47 nach Fig. 6 bis 8 entsprechenden, auch in Fig. 4 sichtbaren Kupplungsring 63 gegenübersteht, der mit einer entsprechenden Sägezahn-Verzahnung 64 versehen ist und unter der Wirkung einer Druckfeder 65 steht. Der Kupplungsring 63 ist in diesem Fall mit Hilfe von Nut/Feder-Verbindungen 63a (Fig. 4) im fünften Sonnenrad 36 axial verschiebbar, jedoch relativ zu diesem undrehbar gelagert. Zur axialen Verschiebung des Kupplungsrings 63 dienen einerseits die Druckfeder 65, andererseits wenigstens ein den Schaltschiebern 50,58 nach Fig. 6 bis 8 entsprechender Schaltschieber 66. Im eingekuppelten Zustand nimmt daher das Sonnenrad 36 das Hohlrad 39 in Antriebsrichtung mit, während eine entgegengesetzte Drehbewegung des Sonnenrads 36 und eine Überholbewegung des Hohlrads 39 wegen der anhand der Fig. 6 bis 8 beschriebenen Freilaufwirkung ohne weiteres möglich sind. Wird der Kupplungsring 63 dagegen vom Hohlrad 39 entkuppelt, dann treibt dieses in der oben beschriebenen Weise den Planetenträger 37 an, wobei sich das Hohlrad 39 über den Freilauf 40 (Fig. 5) an der Nabenachse 1 abstützt. Dabei ist der Freilauf 40 in Fig. 1 beispielsweise als Kupplungsring 67 dargestellt, der analog zu Fig. 6 bis 8 axial verschiebbar, jedoch relativ undrehbar im Lagerring 9 gelagert und durch mindestens eine an diesem abgestützte Druckfeder 68 in Richtung der Nabe 61 vorgespannt ist. Die einander zugewandten Stirnseiten der Nabe 61 und des Kupplungsrings 67 weisen zusammenwirkende Sägezahn-Verzahnungen 69 ent- sprechend Fig. 6 bis 8 auf, wobei die Ausbildung der Zähne so gewählt ist, daß sich entweder die beschriebene Freilaufwirkung ergibt oder eine Rückdrehung des Hohlrads 39 vermieden wird.

Schließlich könnte die Schaltkupplung 32 (Fig. 5) ebenfalls analog zu Fig. 6 bis 8 ausgebildet sein. Alternativ ist es aber auch möglich, gemäß Fig. 1 einen Kupplungsring 70 vorzusehen, der mit einer Stirnseite an dem vom Kupplungsring 63 abgewandten Ende der Druckfeder 65 abgestützt ist, mit seiner anderen Stirnseite dagegen dem Sonnenrad 22 zugewandt und im übrigen wie der Kupplungsring 63 im fünften Sonnenrad 36 verschiebbar und relativ undrehbar zu diesem gelagert ist. Die einander zugewandten Stirnseiten des Sonnenrads 22 und des Kupplungsrings 70 sind mit derart gerichteten Sägezahn-Verzahnungen 71 versehen, daß das Sonnenrad 22 bzw. das Hohlrad 25 den Kupplungsring 70 und damit auch das Sonnenrad 36 in Antriebsrichtung mitnehmen kann. Da dies immer dann erforderlich ist, wenn das Sonnenrad 22 schneller als das Hohlrad 25 bzw. das fünfte Sonnenrad 36 drehen will, d.h. wenn keine der beiden Schaltkupplungen 28,29 eingeschaltet ist, braucht für den Kupplungsring 70 kein gesonderter Schaltschieber vorgesehen werden. Versucht nämlich das Sonnenrad 22 schneller als das Sonnenrad 36 zu drehen, dann nimmt es dieses unter der Wirkung der Druckfeder 65 und des Kupplungsrings 70 automatisch mit. Dreht das Sonnenrad 22 dagegen langsamer oder gar nicht, weil es selbst oder das Sonnenrad 23 mit der Nabenachse 1 gekoppelt ist, dann ergibt sich die mehrfach erläuterte Freilaufwirkung.

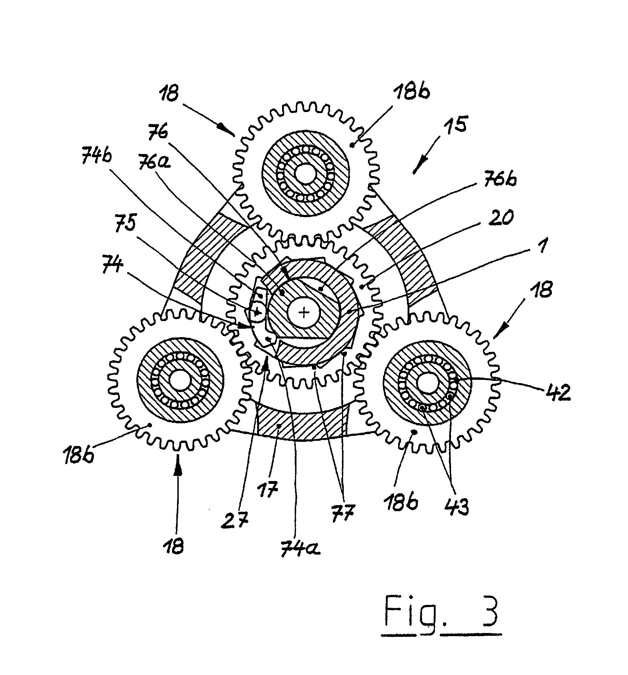

Ein Ausführungsbeispiel für die derzeit vom Anmelder als am besten eingestuften Schaltkupplungen 26 bis 29 ist schematisch in Fig. 2 und 3 anhand der Schaltkupplungen 26 und 27 dargestellt. Danach ist die Nabenachse 1 durchgehend als Hohlachse ausgebildet und im Mantel der hohlen Nabenachse 1 eine Schaltklinke 74 schwenkbar gelagert, die um einen parallel zur Nabenachse 1 verlaufenden Schwenkzapfen 75 drehbar ist. Die Schaltklinke 74 besteht aus einem zweiarmigen Hebel, dessen in die Nabenachse 1 ragender Hebelarm 74a mit einem in der Nabenachse 1 drehbar gelagerten, hier als Schalt- und Nockenwelle 76 ausgebildeten Betätigungsorgan zusammenwirkt, das in Umfangsrichtung wenigstens je einen Nocken 76a bzw. ein Nockental 76b aufweist. Außerdem ist das Sonnenrad 19 bzw. 20 an seinem Innenumfang mit einer derart ausgebildeten Verzahnung 77 versehen, daß der Hebelarm 74b der Schaltklinke 74 in sie einfallen kann, wie Fig. 2 zeigt. Dabei ist die Anordnung so getroffen, daß die Schaltklinke 74 beim Auflaufen des Hebelarms 74a auf einen Nocken 76a der Schalt- und Nockenwelle 76 so verschwenkt wird, daß ihr in die Verzahnung 77 eingerasteter Hebelarm 74b (Fig. 3) aus dieser herausgeschwenkt und dadurch das Sonnenrad 19 bzw. 20 freigegeben wird, wohingegen der Hebelarm 74b beim Einlaufen des Hebelarms 74a in ein Nockental 76b (Fig. 2) von einer nicht dargestellten Feder wieder mit der Sonnenrad-Verzahnung 77 in Eingriff gebracht und dadurch das Sonnenrad 19 bzw. 20 entgegengesetzt zu der durch den Pfeil v dargestellte Antriebsrichtung des Planetenträgers 17 stillgesetzt wird, wie z.B. Fig. 2 zeigt. In entgegengesetzte Richtung ist das Sonnenrad 19,20 frei drehbar (Preilauf). Dabei macht Fig. 1 deutlich, daß im Inneren der Nabenachse 1 trotz der Schaltschieber 50,58 und 66 genügend Platz ist, um die Schalt- und Nockenwelle 76 unterzubringen, selbst wenn diese ihrerseits als Hohlwelle ausgebildet und z.B. von einem in Fig. 1 schematisch angedeuteten Schnellspanner 78 durchragt wird.

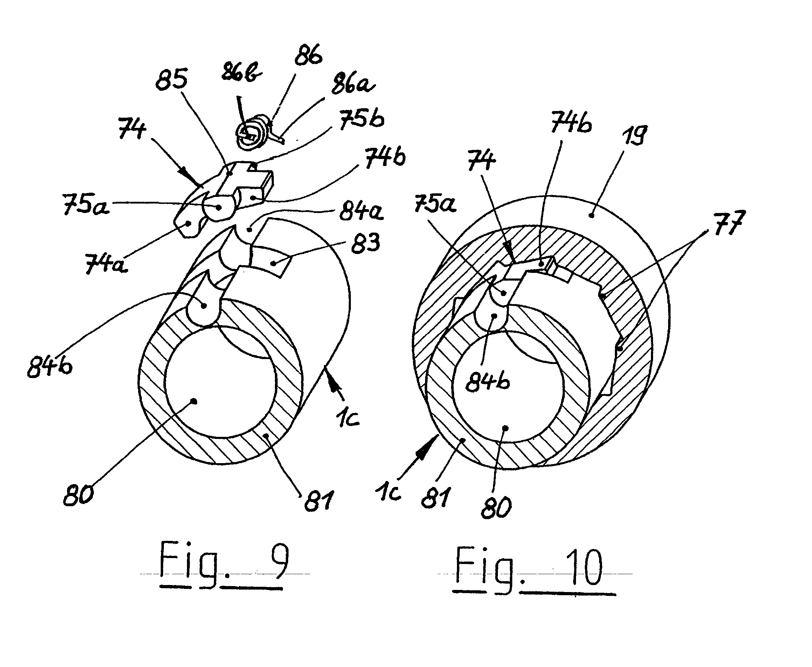

Fig. 9 bis 13 zeigen eine bevorzugte Ausbildung und Lagerung der auch in Fig. 2 und 3 dargestellten Schaltklinke 74. Dabei zeigen Fig. 9 und 10 jeweils einen kurzen Abschnitt lc der Nabenachse 1. Der Abschnitt lc ist als zylindrischer Hohlkörper ausgebildet und besteht im wesentlichen aus einer zylindrischen, einen Hohlraum 80 umschließenden Außenwand 81. In diese Außenwand 81 sind ein senkrecht zu einer geometrischen Mittelachse 82 der Nabenhülse 12 (Fig. 1) verlaufender, die Außenwand 81 durchsetzender Führungsschlitz bzw. Durchbruch 83 und zwei seitlich von diesem angeordnete, parallel zur Achse 82 verlaufende Lagernuten 84a, 84b eingearbeitet, die einen im wesentlichen halbzylindrischen Querschnitt aufweisen, an ihrem Boden aber auch geschlitzt sein könnten. Dagegen sind die Schaltklinken 74 mit zwei seitlich angeformten, den Lagerzapfen 75 nach Fig. 2 und 3 bildenden Zapfenteilen 75a, 75b (Fig. 9) versehen. Wird die Schaltklinke 74 entsprechend Fig. 10 in den Führungsschlitz 83 eingelegt, passen die Zapfenteile 75a, 75b, die zumindest in ihren tragenden Lagerflächen zylindrisch ausgebildet sind, genau in die Lagernuten 84a und 84b, wodurch die Schaltklinke 74 insgesamt schwenkbar in der Außenwand 81 gelagert ist.

Wie insbesondere Fig. 10 zeigt, ist auf dem Abschnitt lc z.B. das nur schematisch angedeutete und insgesamt im wesentlichen kreisringförmig ausgebildete Sonnenrad 19 nach Fig. 1 mit geringem Spiel drehbar gelagert. Das Sonnenrad 19 weist an seinem Innenmantel die umlaufende Verzahnung 77 auf und umgibt die Schaltklinke 74 und die Außenwand 81 im montierten Zustand so, daß die Schaltklinke 74 gegen Herausfallen aus der Nabenachse 1 gesichert ist. Dabei schließt ein Rücken 85 der Schaltklinke 74 vorzugsweise im wesentlichen koplanar mit der äußeren Umfangsfläche der Außenwand 81 ab, so daß sich im wesentlichen eine spielfreie Schwenklagerung ergibt.

Ein besonderer Vorteil der beschriebenen Lagerung besteht darin, daß die Lagerzapfenteile 75a, 75b mit einem Durchmesser ausgebildet werden können, der im wesentlichen gleich der Dicke der Außenwand 81 und der Höhe der Schaltklinke 74 ist. Damit läßt sich die Lagerung im Vergleich zu üblichen Lagerungen, bei denen in Bohrungen gelagerte Drehzapfen verwendet werden, wesentlich kleiner bauen, was wegen der beengten Raumverhältnisse im Bereich der nahe der Mittelachse 82 (Fig. 1) gelegenen Außenwand 81 von großem Vorteil ist und zu geringen Lagerflächenpressungen führt.

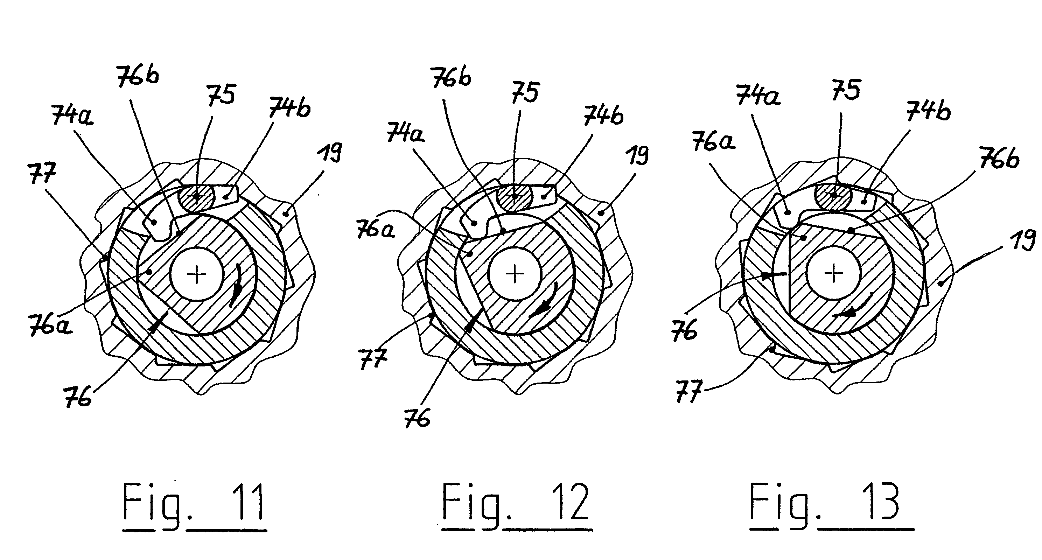

Fig. 11 bis 13 zeigen Schnitte analog zu Fig. 2 und 3 durch das Sonnenrad 19 und eine zugeordnete Schaltklinke 74. Aufgrund der relativen Drehstellung der Schalt- und Nockenwelle 76 ragt in Fig. 11 der Hebelarm 74a innerhalb des Führungsschlitzes 83 bis in ein Nockental 76b, wodurch der Hebelarm 74b unter der Wirkung einer in Fig. 9 angedeuteten, zwischen der Außenwand 81 und dem Zapfenteil 75b abgestützten Drehfeder 86 in eine Lücke der Verzahnung 77 des Sonnenrads 19 eingetreten ist. Dabei ist z.B. jeweils ein Ende 86a bzw. 86b der Drehfeder 86 in einem zugeordneten Loch des Abschnitts lc bzw. der Schaltklinke 74 abgestützt. Dadurch ist das Sonnenrad 19 in einer Drehrichtung entgegen dem in Fig. 11 bis 13 eingezeichneten Pfeil fest mit der Nabenachse 1 bzw. deren Abschnitt 1c gekoppelt, wogegen es Drehungen in Richtung des eingezeichneten Pfeils wegen der Freilaufwirkung durchführen kann.

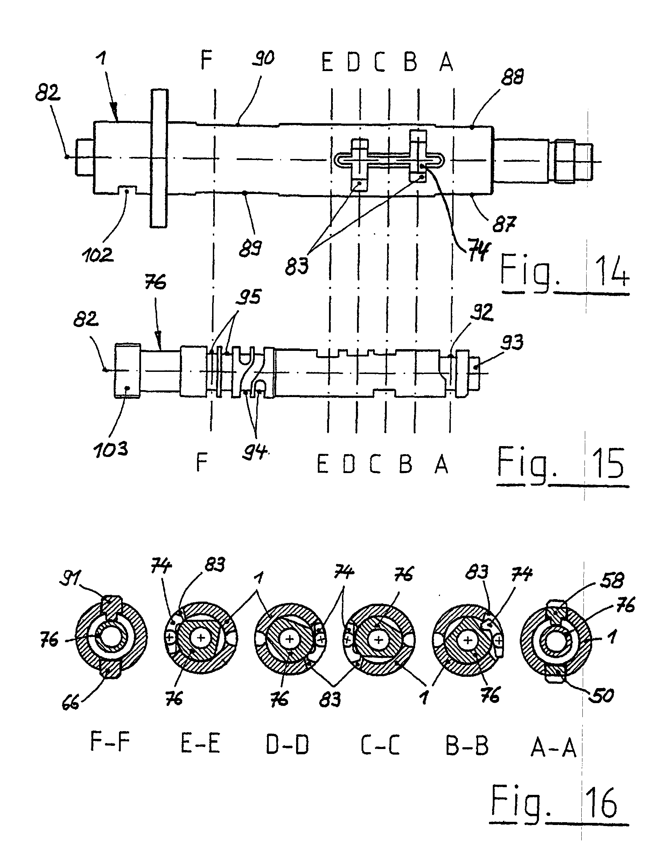

Bei einer Drehung der Schalt- und Nockenwelle 76 in Pfeilrichtung läuft der Hebelarm 74a immer mehr auf einen Nocken 76a auf, wodurch der Hebelarm 74b schließlich gegen die Kraft der Feder 86 aus der Verzahnung 77 herausgeschwenkt wird (Fig. 13), so daß sich das Sonnenrad 19 jetzt in beide möglichen Richtungen frei drehen kann. Dadurch ist es möglich, wie Fig. 11 bis 13 zeigen, das Sonnenrad 19 durch Drehen der Schalt- und Nockenwelle 76 in der einen oder anderen Drehrichtung wahlweise mit der Verzahnung 77 in Eingriff zu bringen oder von dieser zu trennen.

Wie Fig. 11 bis 13 weiter zeigen, können die Dimensionen der Verzahnung 77 und der Hebelarme 74a, 74b so aufeinander abgestimmt werden, daß die Zapfenteile 75a, 75b der Schaltklinke 74 auch bei deren Auflaufen auf einen Nocken 76a (Fig. 11) sicher in den oben offenen Lagernuten 84a, 84b bleiben, indem hierbei z.B. die Zahnköpfe der Verzahnung 77 auf beiden Seiten der Schwenkachse von oben her den Schwenkarmen 74a,74b derart anliegen (Fig. 13), so daß sich insgesamt eine Mehrpunktlagerung ergibt.

Dadurch wird ein ungewünschtes Eintreten der Schaltklinke 74 in die Eingriffsstellung sicher vermieden.

Den übrigen Sonnenrädern 20, 22 und 23 nach Fig. 1 bis 5 sind vorzugsweise entsprechende Schaltklinkenmechanismen zugeordnet, wozu die Nabenachse 1 zumindest im Bereich jedes Sonnenrads einen dem Abschnitt lc entsprechenden Hohlkörperabschnitt aufweist. Dabei erstreckt sich der Abschnitt lc in axialer Richtung zweckmäßig über den ganzen, von Sonnenrädern eingenommenen Bereich, so daß eine entsprechende Anzahl von Schaltklinken 74 mit entsprechenden axialen Abständen in einer gemeinsamen Umfangswand ausgebildet und eine über den gesamten Abschnitt erstreckte Schalt- und Nockenwelle 76 mit einer entsprechenden Anzahl von Nocken 76a und Nockentälern 76b versehen werden kann, die in Bahnen angeordnet sind, die entsprechende axiale Abstände voneinander aufweisen. Dabei werden die Führungsschlitze 83 und Lagernuten 84a, 84b in Umfangsrichtung der Nabenachse 1 zweckmäßig von Sonnenrad zu Sonnenrad z.B. um 180° zueinander versetzt, damit die Sonnenräder mit kleinen axialen Abständen angeordnet werden können, ohne daß sich die Schaltklinken 74 gegenseitig behindern.

Nach einer weiteren bevorzugten Ausführungsform der Erfindung weist die Nabenachse 1 außerhalb des von den Sonnenrädern eingenommenen Bereichs weitere als Hohlkörper ausgebildete Abschnitte auf, die von einer der Außenwand 81 entsprechenden Außenwand begrenzt werden und parallel zur Drehachse 82 (Fig. 1) verlaufende Führungsschlitze bzw. Durchbrüche aufweisen, in denen die Schaltschieber 50, 58, 66 usw. axial verschiebbar gelagert sind. Dadurch kann ein diese Hohlkörper durchragendes, hier als Schaltwelle ausgebildetes Betätigungselement mit zur Verschiebung dieser Schaltschieber bestimmten Mitteln versehen sein, wodurch auch die Steuerung der Schaltschieber 50, 58 und 66 durch in der Außen- bzw. Umfangswand 81 ausgebildete Durchbrüche hindurch vom Inneren der Nabenachse 1 her möglich ist.

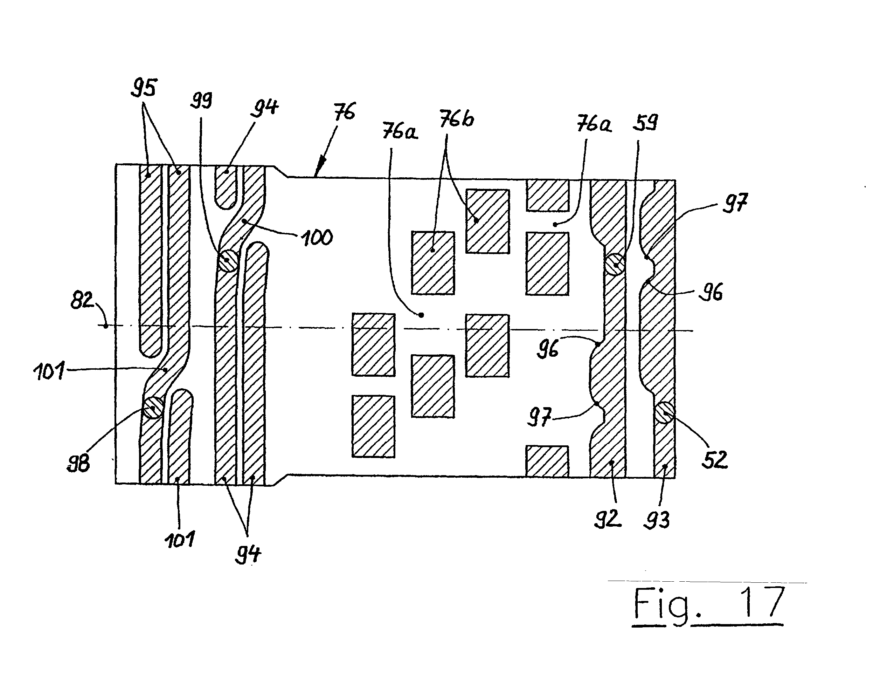

Obwohl die beschriebene Steuerung der Schaltklinken 74 und der Schaltschieber 50, 58, 66 grundsätzlich mit mehreren, in der Nabenachse 1 angeordneten, z.B. je eine Nockenbahn 76a, 76b aufweisenden Betätigungsorganen bzw. -elementen und unabhängig voneinander erfolgen könnte, sind das Betätigungsorgan und das Betätigungselement bei einer für am besten gehaltenen Ausführungsform zu einer einzigen, für die Einstellung aller wählbaren Übersetzungsverhältnisse geeigneten Schalt- und Nockenwelle 76 zusammengefaßt, wie nachfolgend der Fig. 14 bis 17 erläutert wird. Darin zeigen Fig. 14 die Außenansicht der durchgehend hohlen Nabenachse 1, Fig. 15 die für alle Schaltvorgänge gemeinsame Schalt- und Nockenwelle 15 und Fig. 16 Schnitte längs der Linien A-A bis F-F, die für den zusammengebauten Zustand nach Fig. 1 gedacht sind.

Nach Fig. 14 enthält die Nabenachse 1 im Bereich der Schnittlinie A-A zwei axiale, um 180° versetzte Führungsschlitze 87 und 88, in denen die Schaltschieber 50, 58 (Fig. 1, 6 bis 8) axial verschiebbar gelagert sind. In den Schnittlinien B-B bis E-E entsprechenden Abschnitten ist jeweils ein Führungsschlitz 83 zur Aufnahme je einer Schaltklinke 74 für die Sonnenräder 19, 20 bzw. 22, 23 vorgesehen, wobei nebeneinanderliegende Schaltklinken 74 nach Fig. 16 jeweils um 180° in Umfangsrichtung versetzt und entsprechend der gewählten Drehrichtung der Sonnenräder abwechselnd entgegengerichtet angeordnet sind. Schließlich weist die Nabenachse 1 im Bereich der Schnittlinie F-F zwei weitere, diametral gegenüberliegende, axiale Führungsschlitze 89, 90 (Fig. 14) auf, in denen der Schaltschieber 66 und ein demselben Zweck wie dieser dienende Schaltschieber 91 (Fig. 1 und 16) verschiebbar gelagert sind.

Während den Schaltklinken 74 ein mittlerer, die Nocken 76a nach Fig. 2, 3 und 11 bis 13 aufweisender Abschnitt der Schalt- und Nockenwelle 76 zugeordnet ist, weist die Schaltund Nockenwelle 76 im Bereich der Führungsschlitze 87, 88 bzw. 89, 90 je zwei quer zur Achse 82 verlaufende, z.B. als Nuten ausgebildete Führungsbahnen 92, 93 bzw. 94, 95 auf, die in Fig. 17 in der Abwicklung dargestellt sind.

Wie Fig. 7 zeigt, sind die Schaltschieber 50, 58 mit je einem Schaltzapfen 52, 59 versehen, der nach innen in den Hohlkörper und bis in eine zugeordnete Führungsbahn 92 bzw. 93 ragt, von der in Fig. 15 nur jeweils eine Hälfte sichtbar ist. Die Führungsbahnen 92, 93 sind nach Art von Schaltkurven oder Führungsnuten ausgebildet und weisen Anschlagflächen auf, mit denen die Schaltzapfen 52, 59 durch die auf den Kupplungsring 47 einwirkende Druckfeder 49 in Anlage gehalten werden. Jede dieser Anschlagflächen weist zwei schräg zur Achse 82 verlaufende, hier als Schaltflächen 96 bzw. 97 ausgebildete Schaltelemente (vgl. auch Fig. 17) auf, die durch Drehen der Schalt- und Nockenwelle 76 an den Schaltzapfen 52, 59 vorbeigeführt werden. Dabei sind diese Schaltflächen 96, 97 so ausgebildet und angeordnet, daß die Schaltschieber 50, 58 je nach Drehrichtung unter der Steuerung der Schaltfläche 96 axial in der einen Richtung und unter der Steuerung der Schaltfläche 97 in der entgegengesetzten Richtung verschoben werden, wodurch sie die als Kupplungselemente wirksamen Verzahnungen 46, 48 in der anhand der Fig. 6 bis 8 beschriebenen Weise miteinander in Eingriff bringen oder voneinander entkuppeln.

Im Bereich der Schnittlinien B-B bis E-E ist die Schalt- und Nockenwelle 76 mit den oben anhand der Fig. 2, 3 und 9 bis 13 beschriebenen, die Nocken 76a und Nockentäler 76b aufweisenden Nockenbahnen versehen, die daher in Fig. 15 und 17 nur schematisch angedeutet und entsprechend der Lage der Schaltklinken 74 jeweils in Umfangsrichtung versetzt sind.

Die Nocken 76a und Nockentäler 76b und die Schaltflächen 96, 97 sind vorzugsweise nach einem vorgewählten Programm so an der Schalt- und Nockenwelle 76 angebracht, daß durch deren Drehung in der einen und/oder anderen Drehrichtung nacheinander alle mit den Schalteinrichtungen 26 bis 29 und 31, 32 (Fig. 5) herstellbaren Übersetzungsverhältnisse in einer vorgewählten Reihenfolge durchlaufen werden. Erfindungsgemäß wird dabei die Anordnung für den Fall, daß die Getriebenabe als Siebengang-Getriebenabe ausgebildet ist, so getroffen, daß bei einer vollen Umdrehung in der Reihenfolge nach Tabelle 2 alle sieben möglichen Übersetzungsverhältnisse 1 bis 7 eingestellt werden.

Schließlich ist die Schalt- und Nockenwelle 76 im Bereich der Schnittlinie F-F mit den beiden weiteren Führungsbahnen 94 und 95 versehen, die zur Aufnahme von den Schaltzapfen 52, 59 entsprechenden, aber an den Schaltschiebern 66 und 91 angebrachten Schaltzapfen 98, 99 (Fig. 1) dienen. Da die Schaltschieber 66, 91 der Schaltkupplung 41 (Fig. 5) zugeordnet sind, die nach Tabelle 2 nur beim Übergang von der siebten in die achte Gangstufe (bzw. umgekehrt) von dem einen in den anderen Zustand umgeschaltet wird, sind die Führungsbahnen 94, 95 mit diese Übergänge ermöglichenden, hier als weitere Schaltflächen 100, 101 ausgebildeten Schaltelementen versehen, deren Funktion der Funktion der Schaltflächen 94, 95 entspricht. Für den Fall, daß die Getriebenabe als Vierzehngang-Getriebenabe ausgebildet ist, sind die Führungsbahnen 94, 95 entsprechend Fig. 17 so ausgebildet, daß sie sich z.B. über ca. 660° um die Schalt- und Nockenwelle 76 erstrecken und in der Mitte, die etwa der 330°-Stellung entspricht, jeweils mit den Schaltflächen 100, 101 versehen sind. Daher werden die diesen Führungsbahnen 94, 95 zugeordneten und durch die Federn 65 mit ihnen in Anlage gehaltenen Schaltzapfen 98, 99 beim Drehen der Schalt- und Nockenwelle 96 in der einen Drehrichtung zuerst für eine nahezu volle Umdrehung in der einen Schaltstellung gehalten, dann von den Schaltflächen 100, 101 in die jeweils andere Schaltstellung umgeschaltet und dann erneut für eine nahezu volle Umdrehung in dieser Schaltstellung gelassen. Beim Zurückdrehen der Schaltund Nockenwelle 76 erfolgen dieselben Schaltvorgänge in entgegengesetzter Richtung. Dabei werden die Nocken 76a und Nockentäler 76b und die Schaltflächen 96,97 zweckmäßig so am Umfang der Schalt- und Nockenwelle 76 angeordnet, daß entsprechend Tabelle 2 bei einer ersten Umdrehung nacheinander die ersten sieben Gangstufen durchlaufen werden, dann die Umschaltung der Schaltkupplung 41 erfolgt und dann bei einer zweiten Umdrehung der Schalt- und Nockenwelle 76 die Gangstufen Nr. 8 bis Nr. 14 durchlaufen werden. Bei einer Rückdrehung der Schalt- und Nockenwelle 76 in der entgegengesetzten Richtung um zwei volle Umdrehungen wird somit schließlich wieder die Ausgangslage (erste Gangstufe) erreicht.

Die Positionen der Nocken 76a und Nockentäler 76b sind in Drehrichtung vorzugsweise so aufeinander abgestimmt, daß die verschiedenen Schalteinrichtungen auch unter Last leicht geschaltet werden können, indem z.B. beim Einlegen eines neuen Gangs das bisher aktive Sonnenrad kurzzeitig durch Überschneidung bzw. Überlappung der zugehörigen Nockentäler 76b eingeschaltet bleibt und daher keine Unterbrechung des Kraftflusses eintritt. Ist der neue Gang ein schnellerer Gang, dann ist dieser sofort wirksam, da das bisher wirksame Sonnenrad in dem Freilauf weiterlaufen kann, solange es noch eingeschaltet ist. Ist der neue Gang dagegen ein langsamerer Gang, dann bleibt das bisher wirksame Sonnenrad auch weiterhin aktiv, bis es ausgeschaltet wird, da in diesem Fall das neu gewählte Sonnenrad über den Freilauf überholen kann. Dadurch werden unerwünschte Leerlaufstellungen zwischen zwei Gangstufen vermieden. Im übrigen bringt die beschriebene Anordnung den Vorteil mit sich, daß alle vorhandenen Gangstufen auch im Stillstand des Antreibers 7 und/oder der Nabenhülse 12 leicht vorgewählt werden können, da die Schaltklinken 74 und die sonstigen Schaltelemente jeweils so durch Federn betätigbar sind, daß sich die Schalt- und Nockenwelle 76 auch im Stillstand der verschiedenen Teile drehen läßt. Sollten sich am Ende einer solchen Drehung zufällig eine Schaltklinke 74 und ein Zahn der Verzahnung 77 (Fig. 11 bis 13) oder zwei Zähne der Verzahnungen 46,48 (Fig. 7) genau gegenüberstehen, würde nach einem geringfügigen Weiterdrehen des Antreibers 7 die gewünschte Kupplungsstellung erreicht werden, da die Zahl der Zähne am Umfang der zugehörigen Bauteile vergleichsweise groß gewählt werden kann.

Zur Betätigung der Schalt- und Nockenwelle 76 weist die Nabenachse 1 nach Fig. 1 z.B. an dem dem Antreiber 7 gegenüberliegenden Ende eine Aussparung 102 (Fig. 14) auf, durch die ein am entsprechenden Ende auf der Schalt- und Nockenwelle 76 befestigtes Ritzel 103 (vgl. auch Fig. 15) von außen her zugänglich ist. Mit diesem Ritzel 103 kämmt z.B. ein Zahnrad 104, das mit angedeuteten Bowdenzügen 105 in an sich bekannter Weise in der einen oder anderen Richtung gedreht werden kann.

Die Erfindung ist nicht auf die beschriebenen Ausführungsbeispiele beschränkt, die auf vielfache Weise abgewandelt werden können. Es gilt insbesondere für die Ausbildung der Schalt- und Nockenwelle 76, die auch mehrteilig ausgebildet sein könnte. Weiterhin wäre es möglich, daß das mit Hilfe der Nocken 76a, 76b und der Schaltflächen 96, 97 bzw. 100, 101 gespeicherte Programm derart gewählt ist, daß es zum Durchlaufen der einzelnen Gangstufen erforderlich ist, mehr als einen Schalthebel, ein Schaltrad od. dgl. zu bedienen. Weiter wäre es möglich, den beiden Planetengetrieben 15, 16 mehr als zwei Sonnenräder und entsprechend den zugehörigen Planetenrädern mehr als zwei Stufen zuzuordnen, um dadurch weitere Übersetzungsverhältnisse zu schaffen, in welchem Fall die Schalt- und Nockenwelle mit entsprechenden zusätzlichen Nockenbahnen zu versehen wäre. Weiter kann die beschriebene Steuerung auch dann eingesetzt werden, wenn die Sonnenräder und die zugehörigen Planetenradstufen nicht symmetrisch aufgebaut oder die Sonnenräder mit einem anderen feststehenden Teil als der Nabenachse verbunden werden. Außerdem ist die beschriebene Steuerung unabhängig von den im Einzelfall gewählten Zähnenzahlen, die nur als Beispiele aufzufassen sind. Weiterhin ist die beschriebene Anordnung unabhängig davon, ob sich innerhalb der Getriebenabe weitere Bauteile wie z.B. eine Bremse befinden, die zusätzliche Funktionen bewirken. Weiter ist die Erfindung nicht auf den beschriebenen Nachschaltsatz (Planetengetriebe 35) beschränkt. Vielmehr könnte die Anordnung beispielsweise auch so getroffen sein, daß in Fig. 5 die Schaltkupplung 41 zwischen dem Hohlrad 25 und dem Planetenträger 37 angeordnet wird. Auch in diesem Fall würde das Planetengetriebe 35 bei ausgeschalteter Schaltkupplung 41 als Untersetzungsgetriebe und bei eingeschalteter Schaltkupplung 41 als direkte Übersetzung (1:1) wirken. Weiter wäre es möglich, das Planetengetriebe 35 als Vorschaltsatz zu verwenden und zwischen dem Antreiber 7 und dem ersten Planetengetriebe 15 anzuordnen. Abgesehen davon ist das erfindungsgemäße Mehrgang-Getriebe nicht auf die Anwendung innerhalb einer Nabe eines Rades beschränkt. Insbesondere könnte das Getriebe z.B. auch als Zwischenwellen-Getriebe verwendet und zu diesem Zweck z.B. an einem Ort zwischen dem Tretlager und der Nabe eines der beiden Räder des Fahrrades angeordnet sein, in welchem Fall es über entsprechende Zahnräder, Ketten und dgl. auf der Antriebsseite mit dem Tretlager und auf der Abtriebsseite mit einem Rad verbunden werden könnte. Selbst die Anwendung des Getriebes innerhalb des Tretlagers wäre denkbar. Schließlich versteht sich, daß die verschiedenen Merkmale auch in anderen als den beschriebenen und in den Zeichnungen dargestellten Kombinationen angewendet werden können.

## Patentansprüche

1. Mehrgang-Getriebe für Fahrräder, enthaltend: eine an einem Fahrradrahmen drehfest montierbare Achse (1), einen drehbar auf der Achse (1) gelagerten Antreiber (7), eine drehbar auf der Achse (1) gelagerte Hülse (12), ein in der Hülse (12) angeordnetes, den Antreiber (7) und die Hülse (12) verbindendes Planetenrad-Schaltgetriebe (15,16,35) mit wenigstens einem auf der Achse (1) drehbar gelagerten Sonnenrad (19,20,22,23), einem Hohlrad (24,25,39), einem Planetenträger (17,37) und einem drehbar an diesem gelagerten Planetenrad (18,21,38), und eine Schalteinrichtung (26,27,28,29) zur Herstellung von wenigstens zwei Übersetzungsverhältnissen zwischen dem Antreiber (7) und der Hülse (12), wobei die Schalteinrichtung (26,27,28,29) eine Verzahnung (77), eine Schaltklinke (74) und ein zu deren Steuerung bestimmtes, von außerhalb der Hülse (12) bedienbares, drehbar gelagertes Betätigungsorgan (76) derart aufweist, daß die Schaltklinke (74) zur Auswahl der Übersetzungsverhältnisse wahlweise mit der Verzahnung (77) in Eingriff gebracht oder von dieser getrennt werden kann, **dadurch gekennzeichnet, daß** die Verzahnung (77) am Sonnenrad (19,20,22,23) ausgebildet ist, die Achse (1) einen als Hohlkörper ausgebildeten, das Betätigungsorgan (76) aufnehmenden Abschnitt (1c) aufweist und die Schaltklinke (74) in einem Durchbruch (83) einer den Hohlkörper begrenzenden Außenwand (81) dieses Abschnitts gelagert ist.

2. Mehrgang-Getriebe nach Anspruch 1, **dadurch gekennzeichnet, daß** die Schaltklinke (74) durch eine Feder (86) in Richtung des Eingriffs mit der Verzahnung (77) vorgespannt ist.

3. Mehrgang-Getriebe nach Anspruch 2, **dadurch gekennzeichnet, daß** das Betätigungsorgan (76) einen zum Trennen der Schaltklinke (74) aus ihrem Eingriff mit der Verzahnung (77) bestimmten Nocken (76a) aufweist.

4. Mehrgang-Getriebe nach einem der Ansprüche 1 bis 3, **dadurch gekennzeichnet, daß** das Planetenrad-Schaltgetriebe (15,16,35) eine Mehrzahl von axial beabstandeten, wahlweise mit der Achse (1) verbindbaren und Verzahnungen (77) aufweisenden Sonnenrädern (19,20,22,23) aufweist, in der Außenwand (81) des als Hohlkörper ausgebildeten Abschnitts (1c) eine entsprechende Mehrzahl von Schaltklinken (74) gelagert ist und das Betätigungsorgan (76) eine entsprechende Mehrzahl von Nocken (76a) bzw. Nockentälern (76b) aufweist, wobei die Schaltklinken (74) und Nocken (76a) bzw. Nockentäler (76b) mit den Abständen der Sonnenräder (19,20,22,23) entsprechenden axialen Abständen angeordnet sind.

5. Mehrgang-Getriebe nach einem der Ansprüche 1 bis 4, **dadurch gekennzeichnet, daß** sie zur Herstellung wenigstens eines weiteren Übersetzungsverhältnisses wenigstens eine Schaltkupplung (31,41) aufweist, durch die zwei mit Kupplungselementen (46,48) versehene Bauteile (19,7) des Planetenrad-Schaltgetriebes (15,16,35) miteinander in Eingriff bringbar bzw. voneinander trennbar sind, wobei wenigstens eines der Kupplungselemente (48) axial verschiebbar gelagert ist, die Achse (1) wenigstens einen weiteren, als Hohlkörper ausgebildeten Abschnitt enthält, der eine Außenwand mit einem Durchbruch aufweist, in dem ein zur Steuerung des verschiebbaren Kupplungselements (48) bestimmter Schaltschieber (50,58) verschiebbar gelagert ist, und in dem weiteren Hohlkörper Mittel zur Verschiebung des Schaltschiebers (50,58) angeordnet sind.

6. Mehrgang-Getriebe nach Anspruch 5, **dadurch gekennzeichnet, daß** sie mehrere derartige Schaltkupplungen (31,41) aufweist.

7. Mehrgang-Getriebe nach Anspruch 5 oder 6, **dadurch gekennzeichnet, daß** der Schaltschieber (50,58) ein dem weiteren Hohlkörper zugewandtes erstes Schaltelement (52,59) aufweist und das Mittel aus einem mit diesem zusammenwirkenden, zweiten Schaltelement (96,97) besteht, das am Umfang eines drehbar im weiteren Hohlkörper gelagerten, von außerhalb der Hülse (12) her bedienbaren Betätigungselements (76) ausgebildet ist.

8. Mehrgang-Getriebe nach einem der Anspüche 4 bis 7, **dadurch gekennzeichnet, daß** die Nocken (76a) bzw. Nockentäler (76b) nach einem vorgewählten Programm derart am Umfang des Betätigungsorgans (76) angeordnet sind, daß durch Drehung des Betätigungsorgans (76) alle mit Hilfe der Schaltklinken (74) auswählbaren Übersetzungsverhältnisse in einer vorgewählten Reihenfolge einstellbar sind.

9. Mehrgang-Getriebe nach einem der Ansprüche 7 oder 8, **dadurch gekennzeichnet, daß** die zweiten Schaltelemente (96,97) nach einem vorgewählten Programm derart am Umfang des Betätigungselements (76) angeordnet sind, daß durch Drehung des Betätigungselements (76) alle mit Hilfe der Schaltkupplungen (31,41) auswählbaren Übersetzungsverhältnisse in einer vorgewählten Reihenfolge einstellbar sind.

10. Mehrgang-Getriebe nach einem der Ansprüche 7 bis 9, **dadurch gekennzeichnet, daß** das erste Schaltelement ein in den Hohlkörper ragender Schaltzapfen (52,59) und das zweite Schaltelement eine auf den Schaltzapfen (52,59) einwirkende Schaltfläche (96, 97) ist.

11. Mehrgang-Getriebe nach der Ansprüche 1 bis 10, **dadurch gekennzeichnet, daß** die Achse (1) durchgehend als Hohlachse ausgebildet ist und das Betätigungsorgan und das Betätigungselement eine in der Achse (1) drehbar gelagerte Schalt- und Nockenwelle (76) bilden.

12. Mehrgang-Getriebe nach einem der Ansprüche 1 bis 11, **dadurch gekennzeichnet, daß** es als Siebengang-Getriebe ausgebildet ist und daß durch eine Umdrehung des Betätigungsorgans (76) sieben Übersetzungsverhältnisse wählbar sind.

13. Mehrgang-Getriebe nach einem der Ansprüche 1 bis 12, **dadurch gekennzeichnet, daß** es als Vierzehngang-Getriebe ausgebildet ist und daß durch zwei Umdrehungen der gemeinsamen Schalt- und Nockenwelle (76) vierzehn Übersetzungsverhälnisse wählbar sind.

14. Mehrgang-Getriebe nach einem der Ansprüche 1 bis 13, **dadurch gekennzeichnet, daß** die Achse (1) im Bereich jeder Schaltklinke (74) wenigstens einen in Umfangsrichtung verlaufenden, zur Aufnahme der Schaltklinke (74) bestimmten Führungsschlitz (83) und zwei quer dazu angeordnete Lagernuten (84a,84b) aufweist, und daß die Schaltklinke (74) in dem Führungsschlitz (83) angeordnet und mit zwei quer zu ihr erstreckten, angeformten Lagerzapfenteilen (74a,74b) schwenkbar in den Lagernuten (84a,84b) gelagert ist.

15. Mehrgang-Getriebe nach Anspruch 14, **dadurch gekennzeichnet, daß** das Sonnenrad (19,20,22,23) ein drehbar auf der Achse (1) gelagertes, an seinem Innenmantel mit der Verzahnung (77) versehenes, ringförmiges Bauteil ist, das die Achse (1) im Bereich der Schaltklinke (74) umgibt und diese gegen Herausfallen aus der Achse (1) sichert.

16. Mehrgang-Getriebe nach einem der Ansprüche 5 bis 15, **dadurch gekennzeichnet, daß** eines der Kupplungselemente einen axial auf der Achse (1) verschiebbaren, an einer Stirnseite mit einer Sägezahn-Verzahnung (48) versehenen und unter der Vorspannung einer Feder (49) stehenden Kupplungsring (49) enthält, der mit einem der Bauteile (7, 24) drehfest verbunden und durch Betätigung des Schaltschiebers (50,58) mit dem anderen der Bauteile (19) kuppelbar ist, das an einer zugeordneten Stirnseite eine korrespondierende Sägezahn-Verzahnung (46) aufweist.

17. Mehrgang-Getriebe nach einem der Ansprüche 11 bis 16, **dadurch gekennzeichnet, daß** die Schalt- und Nockenwelle (76) aus mehreren, unabhängig voneinander steuerbaren Teilen besteht.

18. Mehrgang-Getriebe nach einem der Ansprüche 11 bis 16, **dadurch gekennzeichnet, daß** die Schalt- und Nockenwelle (76) aus einem einstückig ausgebildeten Bauteil besteht.

19. Mehrgang-Getriebe nach einem der Ansprüche 1 bis 18, **dadurch gekennzeichnet, daß** es als Mehrgang-Getriebenabe ausgebildet ist, wobei die Achse (1) eine Nabenachse und die Hülse (12) eine Nabenhülse ist.

## Revendications

1. Transmission à plusieurs vitesses pour bicyclettes comprenant : un axe (1) fixe en rotation pouvant être monté sur un cadre de bicyclette; un élément d'entraînement (7) monté de façon rotative sur l'axe (1), une douille (12) montée de façon rotative sur l'axe (1), un mécanisme de changement de braquet (15, 16, 35) logé dans la douille (12) et reliant l'élément d'entraînement (7) à la douille (12) qui comporte au moins une roue solaire (19, 20, 22, 23) montée de façon à tourner sur l'axe (1), une roue à denture intérieure (24, 25, 39), un porte-pignons (17, 37) et un pignon (18, 21, 38) monté de façon rotative sur ce dernier, et comprenant également un dispositif de commande (26, 27, 28, 29) pour créer au moins deux rapports de multiplication entre l'élément d'entraînement (7) et la douille (12), sachant que le dispositif de commande (26, 27, 28, 29) présente une denture (77), un cliquet (74) et un organe d'actionnement (76) monté de façon rotative qui est destiné à commander ledit cliquet et qui peut être actionné de l'extérieur de la douille (12), de telle sorte que, pour sélectionner les rapports de multiplication, le cliquet (74) puisse être mis en prise au choix avec la denture (77) ou désolidarisé de celle-ci, **caractérisée en ce que** la denture (77) est réalisée sur la roue solaire (19, 20, 22, 23), **en ce que** l'axe (1) présente un segment (1c) réalisé en tant que corps creux et logeant l'organe d'actionnement (76), et **en ce que** le cliquet (74) est monté dans un passage (83) d'une paroi extérieure (81) dudit segment, qui délimite le corps creux.

2. Transmission à plusieurs vitesses selon la revendication 1, **caractérisée en ce que** le cliquet (74) est précontraint par un ressort (86) en direction de la mise en prise avec la denture (77).

3. Transmission à plusieurs vitesses selon la revendication 2, **caractérisée en ce que** l'organe d'actionnement (76) présente une came (76a) destinée à lever l'engrènement entre le cliquet (74) et la denture (77).

4. Transmission à plusieurs vitesses selon l'une des revendications 1 à 3, **caractérisée en ce que** le mécanisme de changement de braquet (15, 16, 35) présente plusieurs roues solaires (19, 20, 22, 23) espacées les unes des autres dans la direction axiale, dotées de dentures (77) et pouvant être reliées à l'axe (1) ou non, **en ce qu'**un nombre correspondant de cliquets (74) est prévu dans la paroi extérieure (81) du segment (1c) réalisé en tant que corps creux, et **en ce que** l'organe d'actionnement (76) présente un nombre correspondant de cames (76a) ou de creux (76b), sachant que les cliquets (74) et les saillies (76a) et creux (76b) sont disposés avec un espacement axial correspondant à l'écartement des roues solaires (19, 20, 22, 23).

5. Transmission à plusieurs vitesses selon l'une des revendications 1 à 4, **caractérisée en ce que**, pour créer au moins un rapport de multiplication supplémentaire, il présente au moins un dispositif de changement de rapport (31, 41) qui permet de mettre en prise et de désolidariser deux éléments (19, 7) du mécanisme de changement de braquet (15, 16, 36) qui sont dotés d'éléments d'accouplement (46, 48), sachant qu'au moins l'un des éléments d'accouplement (48) est monté de façon à pouvoir coulisser dans la direction axiale, **en ce que** l'axe (1) renferme au moins un segment supplémentaire réalisé en tant que corps creux et présentant une paroi extérieure munie d'un passage dans lequel est montée de manière à pouvoir coulisser un coulisseau (50, 58) destiné à actionner l'élément d'accouplement pouvant coulisser (48), et **en ce que** des moyens pour faire coulisser le coulisseau (50, 58) sont prévus dans le corps creux supplémentaire.

6. Transmission à plusieurs vitesses selon la revendication 5, **caractérisée en ce qu'**elle comporte plusieurs dispositifs de changement de rapport de ce type (31, 41).

7. Transmission à plusieurs vitesses selon la revendication 5 ou 6, **caractérisée en ce que** le coulisseau (50, 58) présente un premier élément de changement de braquet (52, 59) tourné vers le corps creux supplémentaire, et **en ce que** le moyen est constitué par un second élément de changement de braquet (96, 97) coopérant avec le premier, qui est réalisé sur le pourtour d'un élément d'actionnement (76) monté de façon rotative dans le corps creux supplémentaire et pouvant être sollicité depuis l'extérieur de la douille (12).

8. Transmission à plusieurs vitesses selon l'une des revendications 4 à 7, **caractérisée en ce que** les saillies (76a) et les creux (76b) sont disposés sur le pourtour de l'organe d'actionnement (76) selon un ordre prédéfini tel qu'en tournant l'organe d'actionnement (76), il soit possible de passer dans un ordre prédéfini tous les rapports de multiplication pouvant être sélectionnés à l'aide des cliquets (74).

9. Transmission à plusieurs vitesses selon la revendication 7 ou 8, **caractérisée en ce que** les seconds éléments de changement de braquet (96, 97) sont disposés sur le pourtour de l'organe d'actionnement (76) selon un ordre prédéfini tel qu'en tournant l'organe d'actionnement (76), il soit possible de passer dans un ordre prédéfini tous les rapports de multiplication pouvant être sélectionnés à l'aide des cliquets (74).

10. Transmission à plusieurs vitesses selon l'une des revendications 7 à 9, **caractérisée en ce que** le premier élément de changement de braquet est un tenon (52, 59) pénétrant dans le corps creux et le second élément de changement de braquet une surface (96, 97) agissant sur le tenon (52, 59).

11. Transmission à plusieurs vitesses selon l'une des revendications 1 à 10, **caractérisée en ce que** l'axe (1) est réalisé tout du long en tant qu'axe creux et **en ce que** l'organe d'actionnement et l'élément d'actionnement constituent un arbre à cames et de changement de braquet (76) monté de façon rotative dans l'axe (1).

12. Transmission à plusieurs vitesses selon l'une des revendications 1 à 11, **caractérisée en ce qu'**elle est réalisée en tant que mécanisme à sept rapports et **en ce qu'**une rotation complète de l'organe d'actionnement (76) permet de sélectionner sept rapports de multiplication.

13. Transmission à plusieurs vitesses selon l'une des revendications 1 à 12, **caractérisée en ce qu'**elle est réalisée en tant que mécanisme à quatorze rapports et **en ce que** deux rotations complètes de l'arbre à cames et de changement de braquet commun (76) permettent de sélectionner quatorze rapports de multiplication.

14. Transmission à plusieurs vitesses selon l'une des revendications 1 à 13, **caractérisée en ce que** l'axe (1) présente dans la zone de chaque cliquet (74) au moins une fente de guidage (83) s'étendant en direction du pourtour et destinée à recevoir le cliquet (74), ainsi que deux rainures (84a, 84b) orientées transversalement par rapport à ladite fente, et **en ce que** le cliquet (74) est placé dans la fente de guidage (83) et logé de façon pivotante dans les rainures (84a, 84b) au moyen de deux tenons (74a, 74b) faisant corps avec lui et s'étendant transversalement par rapport à lui.

15. Transmission à plusieurs vitesses selon la revendication 14, **caractérisée en ce que** la roue solaire (19, 20, 22, 23) est un élément annulaire monté de façon rotative sur l'axe (1) et muni d'une denture (77) sur son enveloppe intérieure, qui entoure l'axe (1) au voisinage du cliquet (74) pour éviter qu'il ne sorte de l'axe (1).

16. Transmission à plusieurs vitesses selon l'une des revendications 5 à 15, **caractérisée en ce que** l'un des éléments d'accouplement comprend un anneau d'accouplement (47) pouvant coulisser axialement sur l'axe (1), muni d'une denture en dents de scie (48) sur une face frontale et précontraint par un ressort (49), qui est solidaire en rotation avec l'un des éléments (7, 24) et qui, en actionnant le coulisseau (50, 58), peut être accouplé avec l'autre élément (19) présentant sur une face frontale associée une denture en dents de scie complémentaire (46).

17. Transmission à plusieurs vitesses selon l'une des revendications 11 à 16, **caractérisée en ce que** l'arbre à cames et de changement de braquet (76) est composé de plusieurs parties pouvant être commandées indépendamment les unes des autres.

18. Transmission à plusieurs vitesses selon l'une des revendications 11 à 16, **caractérisée en ce que** l'arbre à cames et de changement de braquet (76) est une pièce d'un seul tenant.

19. Transmission à plusieurs vitesses selon l'une des revendications 1 à 18, **caractérisée en ce qu'**elle est réalisée en tant que moyeu portant un mécanisme de propulsion à plusieurs vitesses, sachant que l'axe (1) est un axe de moyeu et la douille (12) une douille de moyeu.

## Claims

1. Multispeed gear system for bicycles, comprising: an axle (1) which can be mounted, fixed against rotation, on a bicycle frame, a driving means (7) which is rotatably mounted on the axle (1), a sleeve (12) which is rotatably mounted on the axle (1), a planetary gear-shifting mechanism (15,16,35) connecting the driving means (7) and the sleeve (12), with at least one sun wheel (19,20,22,23) rotatably mounted on the axle (1), a ring gear (24,25,39), a planet carrier (17,37) and a planet wheel (18,21,38) rotatably mounted thereon, and a shifting device (26,27,28,29) to produce at least two gear ratios between the driving means (7) and the sleeve (12), the shifting device (26,27,28,29) having a tooth arrangement (77), a ratchet (74) and a rotatably mounted actuating member (76) intended to control these elements and operable from outside the sleeve (12), in such a way that the ratchet (74) can be optionally brought into engagement with the tooth arrangement (77) or separated from same to select the gear ratios, **characterised in that** the tooth arrangement (77) is formed on the sun wheel (19,20,22,23), the axle (1) has a section (1c) configured as a hollow body and receiving the actuating member (76), and the ratchet (74) is mounted in an opening (83) of an outer wall (81) of said section, defining the hollow body.

2. Multispeed gear system according to claim 1, **characterised in that** the ratchet (74) is pre-tensioned by a spring (86) in the direction of engagement with the tooth arrangement (77).

3. Multispeed gear system according to claim 2, **characterised in that** the actuating member (76) has a cam (76a) intended to release the ratchet (74) from its engagement with the tooth arrangement (77).

4. Multispeed gear system according to one of claims 1 to 3, **characterised in that** the planetary gear-shifting mechanism (15,16,35) has a plurality of axially spaced-apart sun wheels (19,20,22,23), which can be optionally connected to the axle (1) and have tooth arrangements (77), a corresponding plurality of ratchets (74) is mounted in the outer wall (81) of the section (1c) configured as a hollow body, and the actuating member (76) has a corresponding plurality of cams (76a) or cam depressions (76b), the ratchets (74) and cams (76a) or cam depressions (76b) being disposed at axial spacings corresponding to the spacings between the sun wheels (19,20,22,23).

5. Multispeed gear system according to one of claims 1 to 4, **characterised in that,** in order to produce at least one further gear ratio, it has at least one clutch (31,41) by means of which the two components (19,7) of the planetary gear-shifting mechanism (15,16,35) which are provided with coupling elements (46,48) may be brought into engagement with, or separated from, one another, at least one of the coupling elements (48) being mounted axially displaceable, the axle (1) containing at least one further section configured as a hollow body and having an outer wall with an opening in which a shifting bar (50,58) intended to control the displaceable coupling element (48) is mounted so as to be displaceable, and means for displacing the shifting bar (50,58) being arranged in the further hollow body.

6. Multispeed gear system according to claim 5, **characterised in that** it has a plurality of such clutches (31,41).

7. Multispeed gear system according to claim 5 or 6, **characterised in that** the shifting bar (50,58) has a first shifting element (52,59) facing the further hollow body and the means comprise a second shifting element (96,97) cooperating with the first and which is formed on the perimeter of an actuating member (76) which is rotatably mounted in the further hollow body and can be operated from outside the sleeve (12).

8. Multispeed gear system according to one of claims 4 to 7, **characterised in that** the cams (76a) or cam depressions (76b) are disposed according to a pre-selected programme on the perimeter of the actuating member (76) in such a way that all the gear ratios selectable with the aid of the ratchets (74) can be set in a pre-determined order by rotation of the actuating member (76).

9. Multispeed gear system according to one of claims 7 or 8, **characterised in that** the second shifting elements (96,97) are disposed according to a pre-selected programme on the perimeter of the actuating element (76) in such away that all the gear ratios selectable with the aid of the clutches (31,41) can be set in a pre-selected order by rotation of the actuating element (76).

10. Multispeed gear system according to one of claims 7 to 9, **characterised in that** the first shifting element has an operating journal (52,59) protruding into the hollow body and the second shifting element is an operating surface (96,97) acting on the operating journal (52,59).

11. Multispeed gear system according to claims 1 to 10, **characterised in that** the axle (1) is configured continuously as a hollow axle, and the actuating member and the actuating element form an operating and cam shaft (76) which is rotatably mounted in the axle (1).

12. Multispeed gear system according to one of claims 1 to 11, **characterised in that** it is configured as a 7-gear system and **in that** seven gear ratios can be selected by one revolution of the actuating member (76).

13. Multispeed gear system according to one of claims 1 to 12, **characterised in that** it is configured as a 14-gear system and **in that** fourteen gear ratios can be selected by two revolutions of the common operating and cam shaft (76).

14. Multispeed gear system according to one of claims 1 to 13, **characterised in that** the axle (1) has in the region of each ratchet (74) at least one guide slot (83) extending in the circumferential direction and intended to receive the ratchet (74), and two bearing grooves (84a,84b), arranged transversely with respect to said slot, and **in that** the ratchet (74) is disposed in the guide slot (83) and pivotably mounted in the bearing grooves (84a,84b) by means of two integrally formed journal portions (74a, 74b) which extends transversely with respect to said ratchet.

15. Multispeed gear system according to claim 14, **characterised in that** the sun wheel (19,20,22,23) is an annular component which is rotatably mounted on the axle (1) and provided with the tooth arrangement (77) on its inner casing and which surrounds the axle (1) in the region of the ratchet (74) and secures the latter against falling out of the axle (1).

16. Multispeed gear system according to one of claims 5 to 15, **characterised in that** one of the coupling elements contains a coupling ring (49) which is axially displaceable on the axle (1), is provided on an end face with a sawtooth arrangement (48) and is pre-tensioned by a spring (49), said coupling ring (49) being connected to one of the components (7, 24) to rotate with it and being able to be coupled with the other of the components (19), which has a corresponding sawtooth arrangement (46) on an associated end face, by actuation of the shifting bar (50,58).

17. Multispeed gear system according to one of claims 11 to 16, **characterised in that** the operating and cam shaft (76) comprises a plurality of parts which can be controlled independently of one another.

18. Multispeed gear system according to one of claims 11 to 16, **characterised in that** the operating and cam shaft (76) comprises a component formed as a single piece.

19. Multispeed gear system according to one of claims 1 to 18, **characterised in that** it is configured as a multispeed gear hub, the axle (1) being a hub axle and the sleeve (12) a hub shell.
